# EUROPEAN PATENT SPECIFICATION

(11) **EP 4 407 461 B1**
(45) Date of publication and mention of the grant of the patent: **08.07.2026**
(21) Application number: 23858389.2
(22) Date of filing: 01.09.2023
(51) Int. Cl.: G06F 12/0831, G06F 9/54

(54) **CACHE STATE RECORDING METHOD AND APPARATUS, DATA ACCESS METHOD AND APPARATUS, AND DEVICE**
VERFAHREN UND VORRICHTUNG ZUR AUFZEICHNUNG EINES CACHE-ZUSTANDS, DATENZUGRIFFSVERFAHREN UND -VORRICHTUNG UND VORRICHTUNG
PROCÉDÉ ET APPAREIL D'ENREGISTREMENT D'ÉTAT D'ANTÉMÉMOIRE, PROCÉDÉ ET APPAREIL D'ACCÈS À DES DONNÉES, ET DISPOSITIF

(30) Priority: 13.12.2022 CN 202211593112
(43) Date of publication of application: 31.07.2024
(73) Proprietor: Chengdu Haiguang Integrated Circuit Design Co., Ltd., Chengdu, Sichuan 610216 (CN)
(72) Inventor: XU, Xiangjun, Chengdu, Sichuan 610216 (CN); WEI, Jiaming, Chengdu, Sichuan 610216 (CN)
(74) Representative: Maiwald GmbH
(86) International application number: PCT/CN2023/116416
(87) International publication number: WO 2024/124977

(56) References cited:
- WO-A1-2022/162334
- CN-A- 101 097 545
- CN-A- 110 362 504
- CN-A- 116 107 771
- US-A1- 2006 080 512
- US-A1- 2019 042 425
- US-A1- 2021 200 545
- US-A1- 2022 100 523

## Description

### TECHNICAL FIELD

Embodiments of the present disclosure relate to a cache status recording method, a data access method, and related apparatuses and devices.

### BACKGROUND

CXL (Compute Express Link) interconnection protocol is a protocol for achieving cache coherence between a host and a device, which is used for keeping data cached by a host consistent with data cached by a device, thus avoiding data conflicts in a computing device.

The CXL protocol supports the cache coherence protocol, which is a protocol used for achieving the coherence of data in caches configured by multiple processor cores in a host under a multi-core processor scenario. The cache coherence protocol divides cache data in the caches into a plurality of different statuses to represent the sharing degree of the corresponding cache data by the plurality of processor cores, and performs different operations based on the corresponding statuses. In the CXL protocol, cache data in a cache of a peripheral device is subjected to corresponding status division, and a corresponding operation is performed based on the corresponding status.

Accordingly, when accessing corresponding cache data based on the CXL protocol, it is necessary to record the status of the cache data in the peripheral device, so as to perform the corresponding operation based on the corresponding status. How to record the status of the cache data in the peripheral device is a technical problem that needs to be solved urgently by those skilled in the art.

Reference 1 (US2019042425A1) relates to techniques for managing multi-level memory and coherency using a unified page granular controller can simplify software programming of both file system handling for persistent memory and parallel programming of host and accelerator and enable better software utilization of host processors and accelerators. As part of the management techniques, a line granular controller cooperates with a page granular controller to support both fine grain and coarse grain coherency and maintain overall system inclusion property. In one example, a controller to manage coherency in a system includes a memory data structure and on-die tag cache to store state information to indicate locations of pages in a memory hierarchy and an ownership state for the pages, the ownership state indicating whether the pages are owned by a host processor, owned by an accelerator device, or shared by the host processor and the accelerator device. The controller can also include logic to, in response to a memory access request from the host processor or the accelerator to access a cacheline in a page in a state indicating ownership by a device other than the requesting device, cause the page to transition to a state in which the requesting device owns or shares the page.

Reference 2 (US20220100523A1) relates to embodiments herein describe transferring ownership of data (e.g., cachelines or blocks of data comprising multiple cachelines) from a host to hardware in an I/O device. In one embodiment, the host and I/O device (e.g., an accelerator) are part of a cache-coherent system where ownership of data can be transferred from a home agent (HA) in the host to a local HA in the I/O device-e.g., a computational slave agent (CSA). That way, a function on the I/O device (e.g., an accelerator function) can request data from the local HA without these requests having to be sent to the host HA. Further, the accelerator function can indicate whether the local HA tracks the data on a cacheline-basis or by a data block (e.g., multiple cachelines). This provides flexibility that can reduce overhead from tracking the data, depending on the function's desired use of the data.

### SUMMARY

In view of the above, embodiments of the present disclosure provide a cache status recording method, a data access method and related apparatuses and devices, which can achieve the recording of cache data status in peripheral devices. The invention is set out in the appended set of claims.

To achieve the above objectives, embodiments of the present disclosure provide the following technical solution:
Embodiments of the present disclosure provide a cache status recording method which is applied to a probe filter, wherein a host cache record table is configured in the probe filter, the host cache record table is used for recording a status of cache data of a host in a host cache and a peripheral sharing identifier corresponding to the cache data, the peripheral sharing identifier is used for indicating whether the cache data is shared by a peripheral device, and the method includes:
when the peripheral device shares the cache data in the host cache, updating the peripheral sharing identifier such that the peripheral sharing identifier indicates a corresponding cache data is shared by the peripheral device; and
when a processor core exclusively owns the cache data, updating the peripheral sharing identifier such that the peripheral sharing identifier indicates that the corresponding cache data is not shared by the peripheral device.

Optionally, when the peripheral device exclusively owns the cache data, the method further includes:
sending a device cache information updating request to update device cache information in a memory, such that the device cache information indicates that corresponding data in the memory is cached by the peripheral device as exclusive.

In the present invention, when the peripheral device exclusively owns the cache data, the method further includes:
deleting a status entry corresponding to the cache data in the host cache record table.

Optionally, when the processor core exclusively owns the cache data, the method further includes:
updating a status of the cache data in the host cache in the host cache record table, such that the status of the cache data in the host cache record table indicates that the cache data is exclusively owned by the processor core.

Optionally, when the processor core exclusively owns the cache data, and the host cache record table does not include a status of cache data which is to be accessed, the method further includes:
sending a device cache information updating request to a memory controller to update a device cache information in a memory, such that the device cache information indicates that corresponding data in the memory is cached by the peripheral device as invalid.

Embodiments of the present disclosure further provide a data access method, wherein the method is applied to a probe filter, and the method includes:
acquiring an access request, wherein the access request is used for enabling a request initiator to access data to be accessed, and the access request includes permission information that the request initiator to acquire;
inquiring whether a cache status of the data to be accessed exists in a host cache record table, wherein the host cache record table is used for recording a status of cache data of a host in a host cache and a peripheral sharing identifier corresponding to the cache data, and the peripheral sharing identifier is used for indicating whether the cache data is shared by a peripheral device; and
processing the data to be accessed based on a permission that the access request to acquire and information in the host cache record table.

Optionally, in the access request, the request initiator is the peripheral device, and a device cache request of the peripheral device obtains a sharing permission of the data to be accessed;
when the cache status of the data to be accessed exists in the host cache record table, the processing the data to be accessed based on a permission that the access request to acquire and the information in the host cache record table includes:
sending a data acquisition request to a processor core that caches the data to be accessed, wherein the data acquisition request is used for acquiring the data to be accessed cached by the processor core;
acquiring the data to be accessed sent by the processor core after the processor core sends the data to be accessed;
sending the data to be accessed to the peripheral device; and
executing an updating process of the host cache record table, such that the peripheral sharing identifier corresponding to the data to be accessed in the host cache record table indicates that corresponding cache data is shared by the peripheral device.

Optionally, in the access request, the request initiator is one processor core of a plurality of processor cores, and the processor core requests to acquire an exclusive permission of the data to be accessed;
when the cache status of the data to be accessed exists in the host cache record table, and the data to be accessed is shared by a device cache, the processing the data to be accessed based on a permission that the access request to acquire and the information in the host cache record table includes:
sending a data processing request to the processor core that caches the data to be accessed and a data evicting request to the peripheral device, wherein the data processing request is used for acquiring the data to be accessed and evicting corresponding cache data, and the data evicting request is used for evicting the corresponding cache data;
acquiring the data to be accessed after the processor core that caches the data to be accessed responds to the data processing request, sends the data to be accessed to the probe filter, and evicts the corresponding cache data corresponding to the data to be accessed;
sending the data to be accessed to the processor core that initiates the access request after the peripheral device responds to the data eviction request, evicts the corresponding cache data corresponding to the data to be accessed and sends a response message to the probe filter; and
executing an updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

Optionally, when the cache status of the data to be accessed does not exist in the host cache record table, the processing the data to be accessed based on a permission that the access request to acquire and the information in the host cache record table includes:
sending a data reading request to a memory controller, wherein the data reading request is used for reading the data to be accessed and device cache information corresponding to the data to be accessed;
acquiring the data to be accessed after the memory controller responds to the data reading request and sends the data to be accessed and the device cache information corresponding to the data to be accessed to the probe filter;
inquiring the device cache information to determine whether there are other statuses in which a peripheral device caches the data to be accessed;
if so, sending a data eviction request which is used for requesting the peripheral device to evict the cache data corresponding to the data to be accessed; sending the data to be accessed to the processor core after the peripheral device responds to the data processing request, evicts the cache data corresponding to the data to be accessed, and sends a response message to the probe filter; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device; and executing an updating process of the device cache information, such that the device cache information indicates that the corresponding data in the memory is cached by the peripheral device as invalid;
if not, sending the data to be accessed to the processor core that initiates the access request; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

Optionally, in the access request, the request initiator is a peripheral device, and the peripheral device requests to acquire an exclusive permission of the data to be accessed;
when the cache status of the data to be accessed exists in the host cache record table, the processing the data to be accessed based on a permission that the access request to acquire and the information in the host cache record table includes:
sending a data processing request to the processor core that caches the data to be accessed, wherein the data processing request is used for acquiring the data to be accessed and evicting the cache data corresponding to the processor core;
acquiring the data to be accessed after the processor core responds to the data processing request, sends the data to be accessed to the probe filter, and evicts the cache data corresponding to the data to be accessed;
sending the data to be accessed to the peripheral device; and
executing an updating process of device cache information, such that the device cache information indicates that the corresponding data in the memory is cached by the peripheral device as exclusive.

Embodiments of the present disclosure further provide a computer device which includes a host and a peripheral device,
the probe filter is configured with a host cache record table, the host cache record table is used for recording a status of cache data of the host in the host cache and a peripheral sharing identifier corresponding to the cache data, and the peripheral sharing identifier is used for indicating whether the cache data is shared by the peripheral device.

Optionally, the host cache record table includes status entries corresponding to the cache data in the host one by one, and a status entry includes an address tag, a cache status, a data owner, data distribution, and the peripheral sharing identifier;
the peripheral sharing identifier is configured at a redundant bit of the status entry; or, the peripheral sharing identifier is configured at an independent storage bit of the status entry.

Optionally, the peripheral sharing identifier occupies a 1-bit storage space of the status entry.

Optionally, the host computer further includes a memory, wherein device cache information of cache data of the peripheral device is stored in the memory, and the device cache information is used for recording status information of the cache data of the peripheral device.

Optionally, the device cache information is stored in a redundant space of a memory page where memory data corresponding to the cache data is located.

Optionally, the device cache information includes a peripheral sharing identifier, a device cache status and a device cache data owner, the peripheral sharing identifier is used for marking whether the corresponding data in the memory is cached in the peripheral device, the device cache status is used for marking a status of the corresponding data in the memory in the device cache, and the device cache data owner is used for recording a device identifier of the peripheral device that caches the memory data.

Optionally, the memory further includes an error correcting code checksum, and the error correcting code checksum is calculated based on the device cache information and the memory data corresponding to device cache information.

Unclaimed embodiments of the present disclosure further provide a cache status recording apparatus which applied to a probe filter, wherein a host cache record table is configured in the probe filter, the host cache record table is used for recording a status of cache data of a host in a host cache and a peripheral sharing identifier corresponding to the cache data, the peripheral sharing identifier is used for indicating whether the cache data is shared by a peripheral device, and the cache status recording apparatus includes:
an identifier updating module configured to: when the peripheral device shares the cache data in the host cache, update the peripheral sharing identifier such that the corresponding cache data indicated by the peripheral sharing identifier is shared by the peripheral device; and when a processor core exclusively owns the cache data, update the peripheral sharing identifier, such that the peripheral sharing identifier indicates that the corresponding cache data is not shared by the peripheral device.

Embodiments of the present disclosure further provide a data access apparatus, comprising:
a request acquisition module configured to acquire an access request, wherein the access request is used for enabling a request initiator to access data to be accessed, and the access request includes permission information that the request initiator to acquire;
a status inquiry module configured to inquire whether a cache status of the data to be accessed exists in a host cache record table, wherein the host cache record table is used for recording a status of cache data of a host in a host cache and a peripheral sharing identifier corresponding to the cache data, and the peripheral sharing identifier is used for indicating whether the cache data is shared by a peripheral device; and
an access processing module configured to process the data to be accessed based on a permission that the access request to acquire and the information in the host cache record table.

Embodiments of the present disclosure further provide a storage medium having one or more executable instructions stored thereon, wherein the one or more executable instructions are used for executing the cache status recording method according to the embodiments of the present disclosure, or executing the data access method according to the embodiments of the present disclosure.

The embodiments of the present disclosure provide a cache status recording method, a data access method and related apparatuses and devices. The method is applied to a probe filter, wherein a host cache record table is configured in the probe filter, the host cache record table is used for recording a status of cache data of a host in a host cache and a peripheral sharing identifier corresponding to the cache data, the peripheral sharing identifier is used for indicating whether the cache data is shared by a peripheral device, and the method includes: when the peripheral device shares the cache data in the host cache, updating the peripheral sharing identifier such that the peripheral sharing identifier indicates a corresponding cache data is shared by the peripheral device; and when a processor core exclusively owns the cache data, updating the peripheral sharing identifier such that the peripheral sharing identifier indicates that the corresponding cache data is not shared by the peripheral device.

It can be seen that according to the cache status recording solution and the data access solution provided by embodiments of the present disclosure, based on a peripheral sharing identifier recorded in a host cache record table, a main status that affects a data processing flow can be determined, such that the cache data status can be recorded in the peripheral device, and then a corresponding access flow can be executed based on information in the host cache record table.

### BRIEF DESCRIPTION OF THE DRAWINGS

To provide a clearer explanation of the technical solution of the disclosed embodiments, a brief introduction will be made to the accompanying drawings required for the embodiments. It is obvious that the accompanying drawings described below are only relates to the disclosed embodiments. For those skilled in the art, other accompanying drawings can be obtained based on the provided drawings without creative labor.
FIG. 1 is an alternative architecture diagram of a computer device;
FIG. 2 is an alternative structural diagram of status entries;
FIG. 3 is an alternative structural diagram of a host cache record table provided by embodiments of the present disclosure;
FIG. 4 is an alternative structural diagram of device cache information provided by embodiments of the present disclosure;
FIG. 5 is an alternative flowchart of a data access method provided by embodiments of the present disclosure;
FIG. 6 is an alternative flow diagram of data processing provided by embodiments of the present disclosure;
FIG. 7 is another alternative flow diagram of data processing provided by embodiments of the present disclosure;
FIG. 8 is yet another alternative flow diagram of data processing provided by embodiments of the present disclosure;
FIG. 9 is still another alternative flow diagram of data processing provided by embodiments of the present disclosure;
FIG. 10 is an alternative block diagram of a cache status recording apparatus provided by embodiments of the present disclosure; and
FIG. 11 is an alternative block diagram of a data access apparatus provided by embodiments of the present disclosure.

### DETAILED DESCRIPTION

As mentioned in the background, when accessing corresponding cache data based on the CXL protocol, it is necessary to record the status of the cache data in the peripheral device, so as to perform the corresponding operation based on the corresponding status. How to record the status of the cache data in the peripheral device is a technical problem that needs to be solved urgently by those skilled in the art. Next, a data access flow of a computer device will be described in detail.

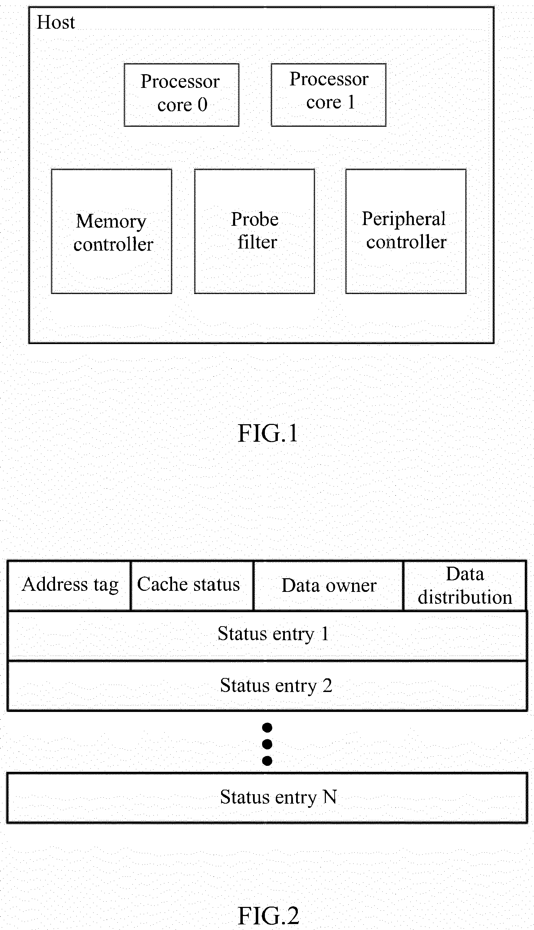

With reference to FIG. 1 of an alternative architecture diagram of a computer device, the computer device includes a host and peripheral devices (also called devices). The host includes a plurality of processor cores (also called computing cores, shown with a processor core 0 and a processor core 1 as examples), a memory controller, a peripheral controller and a probe filter.

Where, each processor core is configured with a corresponding host cache, data access is realized by the corresponding host cache; the memory controller is configured to read and send data in a memory to the host cache, or write the data in the host cache into the memory, and all interactions corresponding to the memory are performed by the memory controller; the peripheral controller is configured to control a data access flow by the peripheral device, and all interactions corresponding to the peripheral device are performed by the peripheral controller; the probe filter is configured to record statuses of cache data of processor cores in the host caches based on access requests of buses, and allow the access requests to execute different processing flows based on their recorded statuses of cache data. In an example of the present disclosure, the peripheral controller controls the peripheral device based on the CXL protocol.

The cache data in the cache may include four statuses: M (Modified), E (Exclusive), S (Share) and I (Invalid). Where, M indicates that the cache data is in a modified status, E indicates that the cache data is in an exclusive status, S indicates that the cache data is in a shared status, and I indicates that the cache data is in an invalid status.

In the probe filter, for the host cache, the status of the cache data of the host cache may be recorded through a host cache record table, wherein a corresponding number of status entries may be set in the host cache record table based on space positions of the caches to record the statuses of the cache data of the corresponding cache spaces. An alternative status entry is structurally shown in FIG. 2, including an address tag, a cache status, a data owner and data distribution, wherein the address tag is used for identifying a system address of the corresponding cache data; the cache status records a corresponding status in the cache, which may be M, E or S, etc.; the data owner records a processor core whose current record address has an owner permission; and the data distribution records a cache condition of the current record address in the processor core.

In an alternative solution, in order to maintain the cache coherence of the peripheral device, a device cache record table is further set in the probe filter, so as to maintain the coherence between the peripheral device and the cache data in the host based on the device cache record table.

Specifically, in the cache of the peripheral device (also called a device cache), the cache data in the cache may also include four statuses: M (Modified), E (Exclusive), S (Share) and I (Invalid). When the cache status of cache data is M, latest data is only stored in the device cache, and there is no copy elsewhere, such that data have to be acquired from the device cache. When the cache status of cache data is E, latest data is stored in the device cache and the host memory at the same time, and the latest data may be acquired through the host memory or the device cache. When the cache status of cache data is S, latest data exists in the host cache, the host memory and the device cache at the same time, and the latest data may be obtained from any of the host cache, the host memory and the device cache. When the cache status of cache data is I, latest data is not necessarily in the device cache, but may exist in the host cache or the host memory. The peripheral device may silently rewrite the E-status to the M-status locally after obtaining a permission of the E-status, such that the E-status and the M-status may be considered together.

Accordingly, the device cache record table includes status entries corresponding to the device cache space positions one by one, and then based on the corresponding status entries, the maintenance of the cache coherence of the device cache may be realized based on the device cache record table.

It can be seen that in order to record the cache data of the device cache, it is necessary to add a storage space in the probe filter to store corresponding status entries. However, the number of peripheral devices and the corresponding cache space sizes are variable. If the added storage space is too large, the corresponding hardware cost is too high; if the added storage space is too small, the degradation of system performance will be caused due to hardware mismatch. Obviously, this cache recording method for the peripheral device has too many defects.

After studying the status of cache data and the access flow of the corresponding cache data, the inventor considers that whether the cache data in the device cache is cached by the host and shared by the peripheral device and the processor core are main factors that affect its access flow, wherein, since it may be determined whether data can be transferred based on the cache data in the host cache when determining whether the cache data is cached by the host, by determining whether the cache data is shared by the peripheral device and the processor core, it may be determined whether there is a device that shares the cache data when an exclusive permission of the cache data needs to be acquired, and then the cache data in the corresponding device is evicted.

In view of this, the inventor considers that whether the data is cached by the host may be confirmed based on the host cache record table, and at the same time, based on the cache data shared by the peripheral device and the processor core, it is necessarily recorded in the host cache. Therefore, a small amount of adjustment may be performed in the host cache record table to mark whether the corresponding cache data is shared by the peripheral device and the processor core in the host cache record table, and then the processing flow of the corresponding cache data can be determined.

In view of this, embodiments of the present disclosure provide a cache status recording solution and a data access solution. In this solution, a peripheral sharing identifier indicating whether cache data is shared by a peripheral device is added to a host cache record table to record a shared status of the cache data, and then the peripheral sharing identifier is updated when the peripheral device shares the cache data in the host cache, such that the peripheral sharing identifier indicates that the corresponding cache data is shared by the peripheral device; at the same time, when a processor core exclusively owns the cache data shared by the peripheral device, the peripheral sharing identifier is updated, such that the peripheral sharing identifier indicates that the corresponding cache data is not shared by the peripheral device.

It can be seen that according to the cache status recording method provided by the embodiment of the present disclosure, based on a peripheral sharing identifier recorded in a host cache record table, a main status that affects a data processing flow is determined, such that the cache data status may be recorded in the peripheral device, and then a corresponding access flow may be executed based on information of the host cache record table.

Moreover, the cache status recording method provided by the embodiment of the present disclosure does not need to additionally set a device cache record table corresponding to the peripheral device, such that it is unnecessary to increase the storage space for storing the corresponding data, or consider the influence of the number of peripheral devices and the sizes of their cache spaces on a system, thus avoiding the defects caused by adding the device cache record table.

Next, the cache status recording method provided by the embodiment of the present disclosure will be described in detail.

The cache status recording method may be applied to the computer device shown in FIG. 1. The aforementioned host cache record table is different in that the host cache record table not only records the status of the cache data of the host in the host cache, but also records the peripheral sharing identifier corresponding to the cache data, which is used for indicating whether the cache data is shared by the peripheral device.

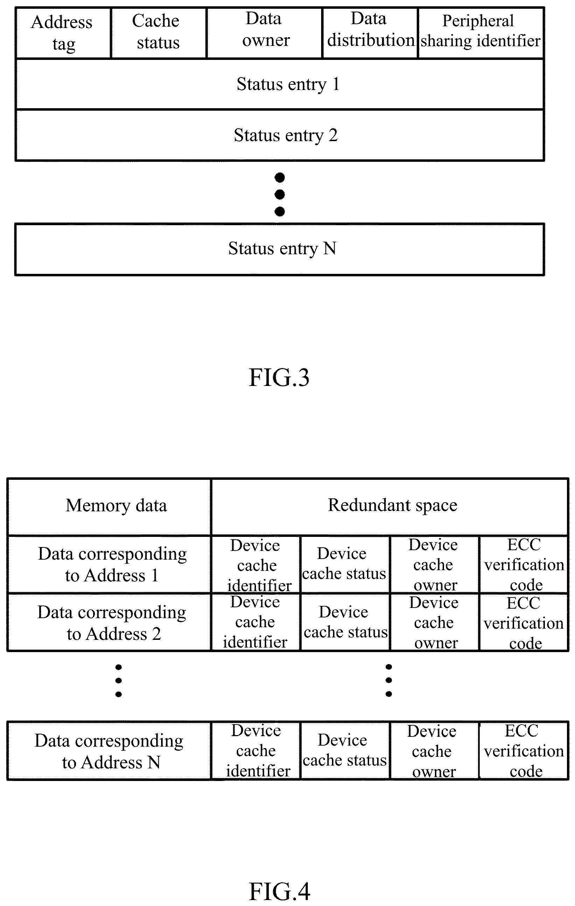

With reference to FIG. 3 for an alternative structural diagram of a host cache record table provided by embodiments of the present disclosure, status entries corresponding to space positions of the host cache one by one, that is, corresponding to the cache data in the host one by one, are set in the host cache record table, the status entries may include an address tags, a cache status, a data owner and data distribution to indicate the status of the cache data of the host in the host cache; meanwhile, the status entry may further include a peripheral sharing identifier which is used for indicating whether the corresponding cache data is shared by a peripheral device, that is, shared by a cache of the peripheral device.

In a specific example, when the status entry has a redundant bit, the redundant bit of the status entry may be configured as the peripheral sharing identifier; when there is no redundant bit in the status entry, a storage space corresponding to the peripheral sharing identifier may be added as an independent storage bit to record the peripheral sharing identifier.

It is noted that the peripheral sharing identifier is only used for marking whether the cache data is shared by the peripheral device, such that it may be realized with only a small amount of space; for example, a 1-bit storage space may be used for recording, and thus "0" or "1" recorded by this bit may be used to indicate whether the corresponding cache data is shared by the peripheral device. Compared with additionally setting a device cache record table corresponding to the peripheral device, the embodiment of the present disclosure obviously has less demand for the storage space, and thus the corresponding hardware cost is also lower.

It can be understood that in the status entry shown in FIG. 3, the address tag is used for identifying a system address of the corresponding cache data; the cache status records a status corresponding to the host cache, which may be M, E or S, etc.; the data owner records a processor core whose current record address has an owner permission; and the data distribution records a cache condition of the current record address in the processor core, for example, the corresponding cache data cache is shared in the processor core 1 and the processor core 2, then, the data distribution record here may record identifiers of the corresponding processor cores 1 and 2 to indicate that the cache data is shared by the processor cores 1 and 2.

It can be understood that only information corresponding to the cache data in the host cache is recorded in the host cache record table; accordingly, the cache data in the device cache that is not shared by the host cache cannot be reflected in the host cache record table; in order to avoid possible data conflicts, in an alternative example of the present disclosure, status information (also called device cache information) of the cache data in the device cache may be further stored in the memory, for example, exclusive status information, modification status information and the like of the cache data in the device cache. In a specific example, the corresponding device cache information may be stored in a redundant space of the memory to store the status of the cache data of the peripheral device. Original data of the cache data, namely memory data, is stored in the memory. It can be understood that in a data access process, the memory data may be read into the cache as cache data, and accordingly, corresponding device cache information may be configured for the memory data cached in a peripheral cache. In a specific example, the device cache information is stored in the redundant space of a memory page where the memory data is located.

The device cache information may correspond to memory data corresponding to the cache data, wherein one memory address (one memory page may correspond to one memory address) may correspond to one piece of device cache information. By taking an alternative structural diagram of device cache information shown in FIG. 4 as an example, the device cache information may include a peripheral sharing identifier, a device cache status, a device cache data owner, etc., wherein the peripheral sharing identifier is used for marking whether the corresponding data in the memory is cached in the peripheral device, the device cache status is used for marking a status of the corresponding data in the memory in the device cache, and the device cache data owner is used for recording a device identifier of the peripheral device that caches the memory data.

It is noted that the shared status corresponding to the cache data that is shared by the device cache and the device cache is recorded based on the peripheral sharing identifier in the host cache record table, and only other statuses corresponding to the cache data may be stored in the device cache information, so as to reduce the complexity of the device cache information.

It can be understood that, when it is necessary to confirm the status of data not shared by the host cache in the device cache, it may be confirmed based on the device cache information stored in the memory.

In a further alternative example, there is also an ECC (Error Correcting Code) checksum in the memory, and the device cache information and the memory data may be subjected to ECC calculation at the same time to obtain the ECC checksum, such that the device cache information and the memory data may be subjected to integrity protection together based on the ECC checksum.

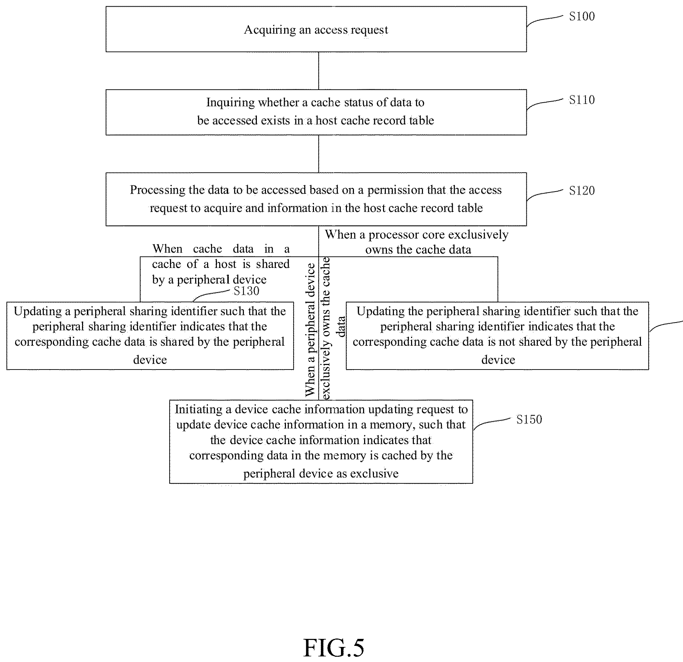

Next, a cache data status recording flow will be further explained in combination with the data access flow, wherein the cache data status recording flow may be implemented based on the probe filter of the computer device and the host cache record table configured in the probe filter. Specifically, an alternative data access flow shown with reference to FIG. 5 includes the following steps.

Step S100: acquire an access request.

Where, the access request is used for enabling a request initiator to access data to be accessed. The request initiator may be a peripheral device or a certain processor core in the host, and the request initiator may execute its assigned task by initiating an access flow.

It is noted that in an architecture with multiple processor cores, in order to maintain the data coherence, the access request also includes permission information that the request initiator to acquire, which may be, for example, a sharing permission, an exclusive permission, a modification permission; different permission information corresponds to statuses of cache data; for example, when the cache data needs to be shared, the permission information corresponding to the access request is the sharing permission, and after the corresponding cache data is acquired, the status of the cache data is recorded as shared, that is, in a shared status; and other permission information is also like this, which is omitted here in the present disclosure.

It can be understood that the access request also includes address information of data to be accessed, and the address information may be the system address of the data to be accessed, such that specific data to be accessed may be determined based on the address information.

Step S110: inquire whether a cache status of the data to be accessed exists in a host cache record table.

Where, the host cache record table is used for recording a status of cache data of a host in a host cache and a peripheral sharing identifier corresponding to the cache data, and the peripheral sharing identifier is used for indicating whether the cache data is shared by a device cache.

It can be understood that the access request includes the address information of the data to be accessed, and then the host cache record table may be inquired based on the address information.

In an alternative example, status entries corresponding to space positions of the host cache one by one are set in the host cache records, and the status entries may include an address tag, a cache status, a data owner, data distribution and a peripheral sharing identifier of the cache data cached in the corresponding space positions, so as to indicate the status of the cache data of the host in the host cache and whether the corresponding cache data is shared by the peripheral device.

It can be understood that in the status entry shown in FIG. 3, the address tag is used for identifying a system address of the corresponding cache data; the cache status records a status corresponding to the host cache, which may be M, E or S, etc.; the data owner records a processor core whose current record address has an owner permission; and the data distribution records a cache condition of the current record address in the processor core, for example, the corresponding cache data cache is shared in the processor core 1 and the processor core 2, then, the data distribution record here may record identifiers of the corresponding processor cores 1 and 2 to indicate that the cache data is shared by the processor cores 1 and 2.

The peripheral sharing identifier is used for indicating whether the cache data is shared by the peripheral device. It can be understood that, on the basis that whether the cache data is shared by the peripheral device is a main factor that affects the data access flow, by only recording whether the cache data is shared by the peripheral device, as little storage space as possible may be occupied on the premise of determining the specific data access flow, thereby reducing the hardware cost as much as possible.

Step S120: process the data to be accessed based on a permission that the access request to acquire and information in the host cache record table.

Based on the information in the host cache record table, it may be determined whether a cache status of the data to be accessed exists in the host cache record table, and if so, it may also be determined whether the corresponding data to be accessed is shared by the device cache.

It can be understood that, since it may be determined whether the data to be accessed can be transferred based on the cache data in the host cache when determining whether the cache data to be accessed is cached by the host, by determining whether the cache data is shared by the peripheral device and the processor core, it may be determined whether there is a deceive that shares the cache data when an exclusive permission of the cache data needs to be acquired, then the cache data in the corresponding device is evicted, and accordingly the corresponding data processing flow may be executed based on the information in the host cache record table.

Accordingly, after executing the corresponding data processing, the status of the cache data may be recorded based on results of the data processing. Specifically, when the peripheral device shares the cache data in the host cache, step S130 is executed.

Step S130: update the peripheral sharing identifier such that the peripheral sharing identifier indicates that the corresponding cache data is shared by the peripheral device.

It is noted that the statement that the peripheral device shares the cache data in the host cache means that step S130 is executed for updating the peripheral sharing identifier, in a case that the request initiator of the access request is the peripheral device, the permission of the corresponding access request for requesting the acquired data to be accessed is a sharing permission, and the peripheral device acquires the data to be accessed based on the corresponding data processing flow.

Accordingly, when the processor core exclusively owns cache data, step S140 is executed.

Step S140: update the peripheral sharing identifier such that the peripheral sharing identifier indicates that the corresponding cache data is not shared by the peripheral device.

Where, the statement that the processor core exclusively owns cache data means that step S140 is executed for updating the peripheral sharing identifier, in a case that the request initiator of the access request is the processor core, the permission of the corresponding access request for requesting the acquired data to be accessed is an exclusive permission, and based on the corresponding data processing flow, the processor core has acquired the data to be accessed and the other processor core or peripheral device has evicted the data to be accessed.

It can be understood that, when the processor core exclusively owns cache data, it needs to determine whether the data to be accessed is shared by the peripheral device based on the information recorded in the host cache record table, so as to determine whether the peripheral device needs to perform a data evicting flow.

In a further example, information that the device cache is in other statuses may be recorded in the memory. Specifically, when the peripheral device exclusively owns cache data, step S150 is executed.

Step S150: send a device cache information updating request to update device cache information in the memory, such that the device cache information indicates that corresponding data in the memory is cached by the peripheral device as exclusive.

It is noted that the statement that the peripheral device exclusively owns cache data means that step S150 is executed for sending a device cache information updating request to the memory controller to update the device cache information, in a case that the request initiator of the access request is the peripheral device, the permission of the corresponding access request for requesting the acquired data to be accessed is an exclusive permission, and based on the corresponding data processing flow, the peripheral device has acquired the data to be accessed and the processor core has evicted the data to be accessed.

Accordingly, the memory controller executes step S160 for updating the device cache information corresponding to the data to be accessed in the memory based on the device cache information updating request.

It can be seen that according to the cache status recording method provided by the embodiment of the present disclosure, based on a peripheral sharing identifier recorded in a host cache record table, a main status that affects a data processing flow can be determined, such that the cache data status may be recorded in the peripheral device, and then a corresponding access flow may be executed based on information of the host cache record table.

It can be understood that since the permissions of data requested by different request initiators are different, the corresponding data access flow and cache data recording method are also different. Next, the data access method and the cache data recording method in the embodiments of the present disclosure are further explained in combination with the permissions of different data initiators and requested data.

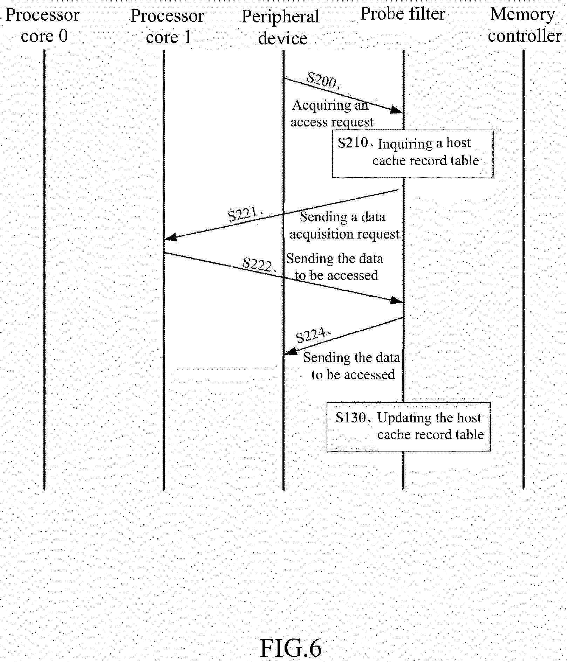

Specifically, by taking a device cache request of the peripheral device which is to acquire a sharing permission of the data to be accessed as an example, and with reference to FIG. 6 for an alternative flow diagram of data processing, the data access method and the cache data recording method may include the following steps.

Step S200: a probe filter acquires an access request of a peripheral device.

In the permission information of the access request, the access request may request to acquire the sharing permission of the data to be accessed. It is noted that in the host, interaction information of the peripheral device is based on a peripheral controller, and the corresponding access request may be issued based on the peripheral controller.

It can be understood that step S200 is a concrete implementation of step S 100, and the detailed description may refer to the introduction in step S 100.

Step S210: the probe filter inquires whether a cache status of the data to be accessed exists in a host cache record table.

It can be understood that based on the access request of the peripheral device, whether the data to be accessed exists in the host cache and whether the data to be accessed is shared by the device cache may be inquired.

It can be understood that step S210 is a concrete implementation of step S110, and the detailed description may refer to the introduction in step S110.

Step S220: the probe filter processes the data to be accessed based on a permission that the access request to acquire and information in the host cache record table.

In the embodiment of the present disclosure, the access request is a sharing permission for the peripheral device to request to acquire the data to be accessed. It can be understood that when the cache status of the data to be accessed exists in the host cache record table, the processing the data to be accessed may specifically include the following steps.

Step S221: the probe filter sends a data acquisition request to a processor core that caches the data to be accessed, wherein the data acquisition request is used for acquiring the data to be accessed cached by the processor core.

The processor core is a processor core corresponding to the cache in which the data to be accessed is recorded in the host cache record table, which is the processor core 1 illustrated as an example. It can be understood that when the cache status of the data to be accessed exists in the host cache record table, it indicates that the host has cached the data to be accessed, and at the same time, the processor core 1 that has cached the data to be accessed may be determined based on the host cache record table, such that a data acquisition request may be sent to the processor core 1 that has cached the data to be accessed to acquire the corresponding data to be accessed.

Step S222: the processor core 1 responds to the data acquisition request and sends the data to be accessed to the probe filter.

Step S223: the probe filter acquires the data to be accessed sent by the processor core 1.

It can be understood that after the processor core 1 sends the data to be accessed, the probe filter may acquire the corresponding data to be accessed.

Step S224: the probe filter sends the data to be accessed to the peripheral device.

After acquiring the data to be accessed, the probe filter may send the data to be accessed to the peripheral device, such that the peripheral device acquires the data to be accessed.

It can be understood that the above data access flow is used to enable the peripheral device to share the cache data in the host cache; accordingly, after step S224 is executed, an updating process of the host cache record table may also be executed, such that the peripheral sharing identifier in the host cache record table corresponding to the data to be accessed indicates that the corresponding cache data is shared by the peripheral device; specifically, step S130 may be executed for updating the peripheral sharing identifier in the host cache record table corresponding to the cache data of the data to be accessed, such that the peripheral sharing identifier indicates that the corresponding cache data is shared by the peripheral device.

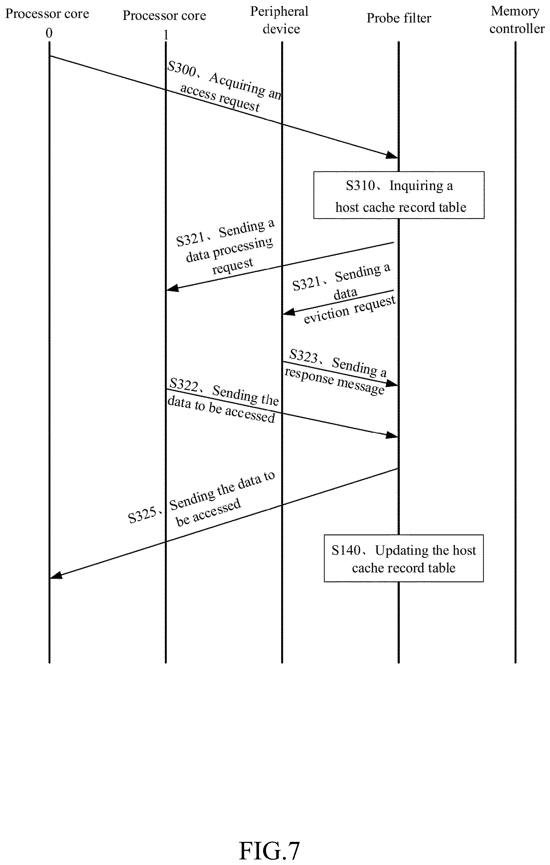

In a further example, by taking one processor core, for example, the processor core 0, of a plurality of processor cores requesting to acquire the exclusive permission of the data to be accessed as an example, and with reference to FIG. 7 for another alternative flow diagram of data processing, the data access method and cache data recording method may include the following steps.

Step S300: the probe filter acquires an access request of a processor core 0.

Where, in permission information of the access request, the access request may request to acquire the exclusive permission of the data to be accessed.

It can be understood that step S300 is a concrete implementation of step S100, and the detailed description may refer to the introduction in step S100.

Step S310: the probe filter inquires whether a cache status of data to be accessed exists in a host cache record table.

It can be understood that based on the access request of the processor core, whether the data to be accessed exists in the host cache and whether the data to be accessed is shared by the device cache may be inquired. It is noted that in a computer device with multiple processor cores, one processor core cannot know whether data accessed by said processor core exists in another processor core, thus it is necessary to confirm whether the data to be accessed exists in the host cache and whether the data to be accessed is shared by the device cache based on records in the host cache record table.

It can be understood that step S310 is a concrete implementation of step S110, and the detailed description may refer to the introduction in step S110.

Step S320: the probe filter processes the data to be accessed based on a permission that the access request to acquire and information in the host cache record table.

In the embodiment of the present disclosure, the access request is an exclusive permission for the processor core 0 to request to acquire the data to be accessed. It can be understood that when the cache status of the data to be accessed exists in the host cache record table and the data to be accessed is shared by the device cache, the processing the data to be accessed may specifically include the following steps.

Step S321: the probe filter sends a data processing request to the processor core 1 that caches the data to be accessed and a data eviction request to the peripheral device, wherein the data processing request is used for acquiring the data to be accessed and evicting the corresponding cache data, and the data eviction request is used for evicting the cache data of the corresponding cache.

It can be understood that when the cache status of the data to be accessed exists in the host cache record table, it indicates that the host has cached the data to be accessed; at the same time, when the data to be accessed is shared by the device cache, it indicates that the peripheral device has cached the data to be accessed; accordingly, in order to meet the exclusive permission requested by the access request, the processor core 1 that has cached the data to be accessed may be determined based on the host cache record table, and the data processing request may be sent to the processor core 1 that has cached the data to be accessed and the peripheral device, to acquire the data to be accessed and evict the cache data corresponding to the processor core 1 and the peripheral device.

Step S322: the processor core 1 responds to the data processing request, sends the data to be accessed to the probe filter, and evicts the cache data corresponding to the data to be accessed.

It can be understood that, compared with data transmission between the peripheral device and the processor core, data transmission inside the processor core has obviously shorter delay and higher transmission efficiency, thus the data to be accessed may be sent by the processor core to the probe filter.

Where, the data to be accessed may be sent to the probe filter as a response message, and meanwhile the response message is used for informing the probe filter that the corresponding cache data has been evicted.

Step S323: the peripheral device responds to the data eviction request, evicts the cache data corresponding to the data to be accessed, and sends a response message to the probe filter.

Where, after the processor core sends the data to be accessed to the probe filter, the peripheral device may stop sending the data to be accessed and only execute the corresponding data evicting flow.

The response message is used for informing the probe filter that the corresponding cache data has been evicted.

Step S324: the probe filter acquires the data to be accessed sent by the processor core.

It can be understood that after the processor core sends the data to be accessed, the probe filter may acquire the corresponding data to be accessed.

It is noted that when the peripheral device sends a corresponding response message, the probe filter may receive the response message.

Step S325: the probe filter sends the data to be accessed to the processor core that initiates the access request.

After acquiring the data to be accessed, the probe filter may send the data to be accessed to the processor core, such that the processor core acquires the data to be accessed.

It is noted that after acquiring the data to be accessed, the probe filter still should confirm to send the data to be accessed after receiving the response message from the peripheral device.

It can be understood that the above data access flow is used to enable the processor core to exclusively own the cache data shared by the host cache and the device cache; accordingly, after step S325 is executed, the updating process of the host cache record table may also be executed, such that the exclusive status corresponding to the data to be accessed is recorded in the host cache record table, and the peripheral sharing identifier corresponding to the data to be accessed indicates that the corresponding cache data is not shared by the peripheral device; specifically, step S140 is executed for updating the peripheral sharing identifier in the host cache record table corresponding to the cache data of the data to be accessed, such that the peripheral sharing identifier indicates that the corresponding cache data is not shared by the peripheral device. In step S 140, a status of the corresponding cache data in the host cache in the host cache record table may be further updated, such that the status of the cache data in the host cache record table indicates that the cache data is exclusively owned by the processor core.

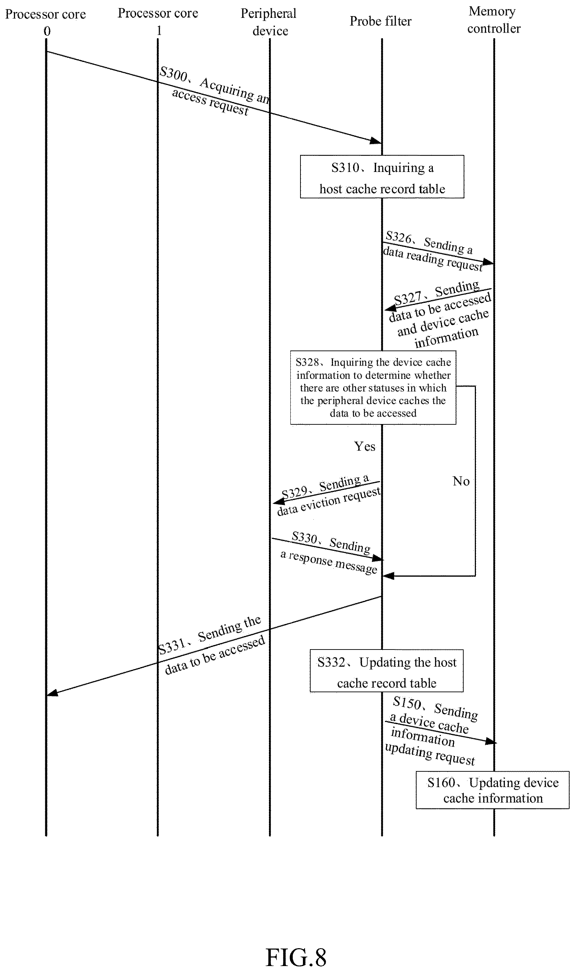

In a further example, when the cache status of the data to be accessed does not exist in the host cache record table, it is necessary to determine whether there are other statuses in which the data to be accessed is cached by the peripheral device, and corresponding processing is further performed. Specifically, with reference to FIG. 8 for yet another alternative flow diagram of data processing, the processing the data to be accessed may specifically include the following steps.

Step S326: the probe filter sends a data reading request to a memory controller, wherein the data reading request is used for reading the data to be accessed and device cache information corresponding to the data to be accessed.

In an alternative example, the device cache information is stored in the redundant space of the memory page where the memory data is located, and the data reading request may read the corresponding device cache information while reading the data to be accessed.

Step S327: the memory controller responds to the data reading request and sends the data to be accessed and the device cache information corresponding to the data to be accessed to the probe filter.

Based on the data reading request, the memory controller may execute a reading flow of the corresponding data in the memory.

Step S328: the probe filter inquires the device cache information.

After receiving the device cache information, the probe filter may first inquire the device cache information to determine whether there are other statuses in which the peripheral device caches the data to be accessed, and if so, step S329 is executed; if not, step S331 is executed.

Step S329: the probe filter sends a data eviction request, which is used for requesting the peripheral device to evict the cache data corresponding to the data to be accessed.

Step S330: the peripheral device responds to the data processing request, evicts the cache data corresponding to the data to be accessed, and sends a response message to the probe filter.

The response message is used for informing the probe filter that the corresponding cache data has been evicted.

Step S331: the probe filter sends the data to be accessed to the processor core.

After acquiring the data to be accessed and the response message sent by the peripheral device, the probe filter may send the data to be accessed to the processor core, such that the processor core acquires the data to be accessed.

It can be understood that the above data access flow is used to enable the processor core to exclusively own the corresponding cache data; accordingly, after step S331 is executed, the updating process of the host cache record table may be further executed, such that the exclusive status corresponding to the data to be accessed is recorded in the host cache record table, and the peripheral sharing identifier corresponding to the data to be accessed indicates that the corresponding cache data is not shared by the peripheral device; specifically, step S332 is executed for updating a status of the corresponding cache data in the host cache in the host cache record table, such that the status of the cache data in the host cache record table indicates that the cache data is exclusively own by the processor core. It can be understood that when the status of the cache data in the host cache record table indicates that the cache data is exclusively own by the processor core, then the peripheral sharing identifier of the corresponding data to be accessed is set to indicate that the corresponding cache data is not shared by the peripheral device.

It can be understood that the above data access flow is used to enable the processor core to exclusively own the cache data of the host cache; accordingly, if there are other statuses in which the peripheral device caches the data to be accessed exists in the device cache information, the updating process of device cache information should be executed after step S332 is executed, such that the device cache information indicates that the corresponding data in the memory is cached by the peripheral device as invalid; specifically, step S150 may be executed for sending the device cache information updating request to the memory controller to update the device cache information in the memory, such that the device cache information indicates that the corresponding data in the memory is cached by the peripheral device as invalid. Accordingly, in step S160, the memory controller updates the device cache information corresponding to the data to be accessed in the memory as invalid based on the device cache information updating request.

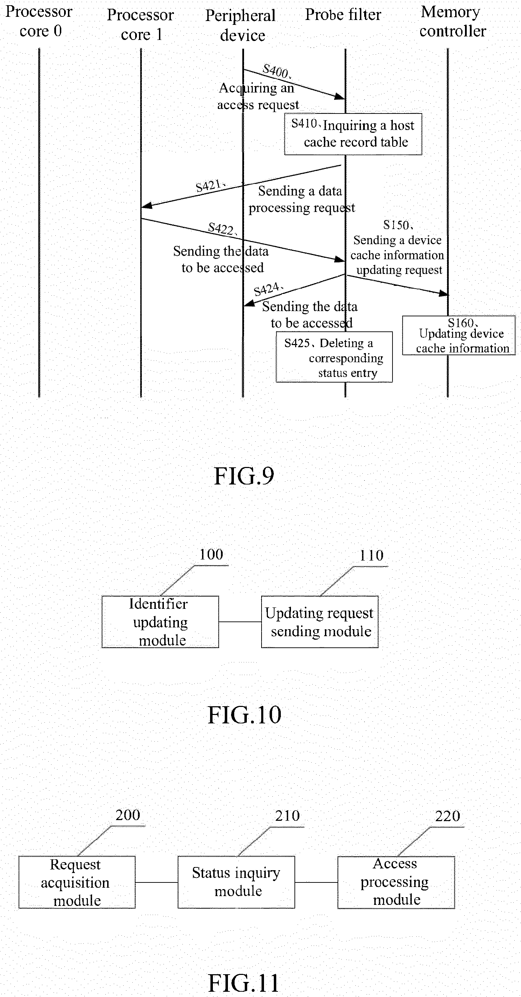

In a further example, by taking the peripheral device requesting to acquire the exclusive permission of the data to be accessed as an example, and with reference to FIG. 9 for still another alternative flow diagram of data processing, the data access method and the cache data recording method may include the following steps.

Step S400: a probe filter acquires an access request of a peripheral device.

Where, in permission information of the access request, the access request may request to acquire the exclusive permission of the data to be accessed.

It can be understood that step S400 is a concrete implementation of step S100, and the detailed description may refer to the introduction in step S100.

Step S410: the probe filter inquires whether a cache status of data to be accessed exists in a host cache record table.

Based on the access request of the peripheral device, whether the data to be accessed exists in the host cache may be inquired.

It can be understood that step S410 is a concrete implementation of step S110, and the detailed description may refer to the introduction in step S110.

Step S420: the probe filter processes the data to be accessed based on a permission that the access request to acquire and information in the host cache record table.

In the embodiment of the present disclosure, the access request is an exclusive permission for the peripheral device to request to acquire the data to be accessed. It can be understood that when the cache status of the data to be accessed exists in the host cache record table, the processing the data to be accessed may specifically include the following steps.

Step S421: the probe filter sends the data processing request to the processor core that caches the data to be accessed, wherein the data processing request is used for acquiring the data to be accessed and evicting the cache data corresponding to the processor core.

It can be understood that when the cache status of the data to be accessed exists in the host cache record table, it indicates that the host has cached the data to be accessed; accordingly, in order to meet the exclusive permission requested by the access request, the processor core that has cached the data to be accessed may be determined based on the host cache record table, and the data processing request may be sent to the processor core that has cached the data to be accessed (for example, the processor core 1 has cached the data to be accessed in the figure) to acquire the data to be accessed and evict the cache data corresponding to the processor core.

Step S422: the processor core 1 responds to the data processing request, sends the data to be accessed to the probe filter, and evicts the cache data corresponding to the data to be accessed.

Where, the data to be accessed may be sent to the probe filter as a response message, and meanwhile the response message is used for informing the probe filter that the corresponding cache data has been evicted.

Step S423: the probe filter acquires the data to be accessed sent by the processor core.

It can be understood that after the processor core sends the data to be accessed, the probe filter may acquire the corresponding data to be accessed.

Step S424: the probe filter sends the data to be accessed to the peripheral device.

After acquiring the data to be accessed, the probe filter may send the data to be accessed to the peripheral device, such that the peripheral device acquires the data to be accessed.

It can be understood that the above data access flow is used to enable the peripheral device to exclusively own the cache data of the host cache; accordingly, after step S424 is executed, the updating process of device cache information is executed, such that the device cache information indicates that the corresponding data in the memory is cached by the peripheral device as exclusive; specifically, step S150 is executed for sending the device cache information updating request to the memory controller to update the device cache information in the memory, such that the device cache information indicates that the corresponding data in the memory is cached by the peripheral device as exclusive. Accordingly, in step S160, the memory controller updates the device cache information corresponding to the data to be accessed in the memory as exclusive based on the device cache information updating request.

It is noted that after step S150 is executed, step S425 may be further executed for updating a status entry of the corresponding cache data in the host cache record table, that is, deleting the status entry of the corresponding cache data in the host cache record table, such that the host cache record indicates that the host cache does not cache the corresponding data to be accessed.

It can be seen that the data access method provided by the embodiment of the present disclosure can implement corresponding access based on the information recorded in the host cache record table.

Next, the cache status recording apparatus and the data access apparatus provided by the embodiments of the present disclosure are introduced. The cache status recording apparatus and the data access apparatus described below may be considered as functional modules that the probe filter requires to be provided with to implement the cache status recording method and the data access method provided by the embodiments of the present disclosure. The contents of the cache status recording apparatus and the data access apparatus described below may be referred to in correspondence with the contents of the method described above.

In an alternative implementation, FIG. 10 shows an alternative block diagram of a cache status recording apparatus provided by embodiments of the present disclosure, which may be applied to a probe filter. As shown in FIG. 10, the cache status recording apparatus may include:

an identifier updating module 100 configured to: when the peripheral device shares the cache data in the host cache, update the peripheral sharing identifier such that the corresponding cache data indicated by the peripheral sharing identifier is shared by the peripheral device; and when a processor core exclusively owns the cache data, update the peripheral sharing identifier, such that the peripheral sharing identifier indicates that the corresponding cache data is not shared by the peripheral device.

Alternatively, the cache status recording apparatus may further include: an updating request sending module 110 configured to: when the peripheral device exclusively caches data, send a device cache information updating request to update device cache information in the memory, such that the device cache information indicates that corresponding data in the memory is cached by the peripheral device as exclusive.

Alternatively, the identifier updating module 100 is further configured to delete a status entry corresponding to the cache data in the host cache record table when the peripheral device exclusively owns the cache data.

Alternatively, the identifier updating module 100 is further configured to update a status of the corresponding cache data in the host cache in the host cache record table when the processor core exclusively owns the cache data, such that the status of the cache data in the host cache record table indicates that the cache data is exclusively owned by the processor core.

Alternatively, the updating request sending module 110 is further configured to: when the processor core exclusively owns the cache data and the host cache record table does not have a cache status of the data to be accessed, and
send a device cache information updating request to a memory controller to update the device cache information in the memory, such that the device cache information indicates that corresponding data in the memory is cached by the peripheral device as invalid.

In an alternative implementation, FIG. 11 shows an alternative block diagram of a data access apparatus provided by embodiments of the present disclosure, which may be applied to a probe filter. As shown in FIG. 11, the data access apparatus may include:
a request acquisition module 200 configured to acquire an access request, wherein the access request is used for enabling a request initiator to access data to be accessed, and the access request includes permission information that the request initiator to acquire;
a status inquiry module 210 configured to inquire whether a cache status of the data to be accessed exists in a host cache record table, wherein the host cache record table is used for recording a status of cache data of a host in a host cache and a peripheral sharing identifier corresponding to the cache data, and the peripheral sharing identifier is used for indicating whether the cache data is shared by a cache of a device; and
an access processing module 220 configured to process the data to be accessed based on a permission that the access request to acquire and the information in the host cache record table.

Alternatively, in the access request, the request initiator is a peripheral device, and a device cache of the peripheral device requests to acquire a sharing permission of the data to be accessed;
when the cache status of the data to be accessed exists in the host cache record table, the processing, by the access processing module 220, the data to be accessed based on a permission to be acquired by the access request and the information in the host cache record table includes:
sending a data acquisition request to a processor core that caches the data to be accessed, wherein the data acquisition request is used for acquiring the data to be accessed cached by the processor core;
acquiring the data to be accessed sent by the processor core after the processor core sends the data to be accessed;
sending the data to be accessed to the peripheral device; and
executing an updating process of the host cache record table, such that the peripheral sharing identifier corresponding to the data to be accessed in the host cache record table indicates that corresponding cache data is shared by the peripheral device.

Alternatively, in the access request, the request initiator is one processor core of a plurality of processor cores, and the processor core requests to acquire an exclusive permission of the data to be accessed;
when the cache status of the data to be accessed exists in the host cache record table, and the data to be accessed is shared by the device cache, the processing, by the access processing module 220, the data to be accessed based on a permission that the access request to acquire and the information in the host cache record table includes:
sending a data processing request to the processor core that caches the data to be accessed and a data eviction request to the peripheral device, wherein the data processing request is used for acquiring the data to be accessed and evicting the corresponding cache data, and the data eviction request is used for evicting the cache data of the corresponding cache;
acquiring the data to be accessed after the processor core that caches the data to be accessed responds to the data processing request, sends the data to be accessed to the probe filter, and evicts the cache data corresponding to the data to be accessed;
sending the data to be accessed to the processor core that initiates the access request after the peripheral device responds to the data eviction request, evicts the cache data corresponding to the data to be accessed and sends a response message to the probe filter; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

Alternatively, when the cache status of the data to be accessed does not exist in the host cache record table, the processing, by the access processing module 220, the data to be accessed based on a permission that the access request to acquire and the information in the host cache record table includes:
sending a data reading request to a memory controller, wherein the data reading request is used for reading the data to be accessed and device cache information corresponding to the data to be accessed;
acquiring the data to be accessed after the memory controller responds to the data reading request and sends the data to be accessed and the device cache information corresponding to the data to be accessed to the probe filter;
inquiring the device cache information to determine whether there are other statuses in which the peripheral device caches the data to be accessed;
if so, sending a data eviction request which is used for requesting the peripheral device to evict the cache data corresponding to the data to be accessed; sending the data to be accessed to the processor core after the peripheral device responds to the data processing request, evict the cache data corresponding to the data to be accessed, and sends a response message to the probe filter; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device; and executing an updating process of the device cache information, such that the device cache information indicates that the corresponding data in the memory is cached by the peripheral device as invalid;
if not, sending the data to be accessed to the processor core that initiates the access request; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

Alternatively, in the access request, the request initiator is a peripheral device, and the peripheral device requests to acquire an exclusive permission of the data to be accessed;
when the cache status of the data to be accessed exists in the host cache record table, the processing, by the access processing module 220, the data to be accessed based on a permission to be acquired by the access request and the information in the host cache record table includes:
sending the data processing request to the processor core that caches the data to be accessed, wherein the data processing request is used for acquiring the data to be accessed and evicting the cache data corresponding to the processor core;
acquiring the data to be accessed after the processor core responds to the data processing request, sends the data to be accessed to the probe filter, and evicts the cache data corresponding to the data to be accessed;
sending the data to be accessed to the peripheral device; and
executing the updating process of the device cache information, such that the device cache information indicates that the corresponding data in the memory is cached by the peripheral device as exclusive.

Embodiments of the present disclosure also provide a storage medium having one or more executable instructions stored thereon, the one or more executable instructions are used for executing the cache status recording method provided by the embodiments of the present disclosure, or executing the data access method provided by the embodiments of the present disclosure.

It can be seen that according to the cache status recording solution and the data access solution provided by embodiments of the present disclosure, based on a peripheral sharing identifier recorded in a host cache record table, a main status that affects a data processing flow can be determined, such that the cache data status can be recorded in the peripheral device, and then a corresponding access flow can be executed based on information of the host cache record table.

## Claims

1. A cache status recording method, wherein the method is applied to a probe filter, wherein a host cache record table is configured in the probe filter, the host cache record table is used for recording a status of cache data of a host in a host cache and a peripheral sharing identifier corresponding to the cache data, the peripheral sharing identifier is used for indicating whether the cache data is shared by a peripheral device, and the method comprises:
when the peripheral device shares the cache data in the host cache, updating the peripheral sharing identifier such that the peripheral sharing identifier indicates a corresponding cache data is shared by the peripheral device;
**characterized by**,
when a processor core exclusively owns the cache data, updating the peripheral sharing identifier such that the peripheral sharing identifier indicates that the corresponding cache data is not shared by the peripheral device; and
wherein when the peripheral device exclusively owns the cache data, the method further comprises:
deleting a status entry corresponding to the cache data in the host cache record table.

2. The method according to claim 1, wherein when the peripheral device exclusively owns the cache data, the method further comprises:
sending a device cache information updating request to update device cache information in a memory, such that the device cache information indicates that corresponding data in the memory is cached by the peripheral device as exclusive.

3. The method according to claim 1, wherein when the processor core exclusively owns the cache data, the method further comprises:
updating a status of the cache data in the host cache in the host cache record table, such that the status of the cache data in the host cache record table indicates that the cache data is exclusively owned by the processor core.

4. The method according to claim 1, wherein when the processor core exclusively owns the cache data, and the host cache record table does not comprise a status of cache data which is to be accessed, the method further comprises:
sending a device cache information updating request to a memory controller to update a device cache information in a memory, such that the device cache information indicates that corresponding data in the memory is cached by the peripheral device as invalid.

5. A data access method, wherein the method is applied to a probe filter, a host cache record table is configured in the probe filter, and the method comprises:
acquiring an access request, wherein the access request is used for enabling a request initiator to access data to be accessed, and the access request comprises permission information that the request initiator to acquire;
inquiring whether a cache status of the data to be accessed exists in a host cache record table, wherein the host cache record table is used for recording a status of cache data of a host in a host cache and a peripheral sharing identifier corresponding to the cache data, and the peripheral sharing identifier is used for indicating whether the cache data is shared by a peripheral device; and
processing the data to be accessed based on a permission that the access request to acquire and information in the host cache record table;
**characterized in that**
when the peripheral device exclusively owns the cache data, a status entry corresponding to the cache data is deleted from the host cache record table.

6. The method according to claim 5, wherein in the access request, the request initiator is the peripheral device, and a device cache request of the peripheral device obtains a sharing permission of the data to be accessed;
when the cache status of the data to be accessed exists in the host cache record table, the processing the data to be accessed based on a permission that the access request to acquire and the information in the host cache record table comprises:
sending a data acquisition request to a processor core that caches the data to be accessed, wherein the data acquisition request is used for acquiring the data to be accessed cached by the processor core;
acquiring the data to be accessed sent by the processor core after the processor core sends the data to be accessed;
sending the data to be accessed to the peripheral device; and
executing an updating process of the host cache record table, such that the peripheral sharing identifier corresponding to the data to be accessed in the host cache record table indicates that corresponding cache data is shared by the peripheral device.

7. The method according to claim 5, wherein in the access request, the request initiator is one processor core of a plurality of processor cores, and the processor core requests to acquire an exclusive permission of the data to be accessed;
when the cache status of the data to be accessed exists in the host cache record table, and the data to be accessed is shared by a device cache, the processing the data to be accessed based on a permission that the access request to acquire and the information in the host cache record table comprises:
sending a data processing request to the processor core that caches the data to be accessed and a data eviction request to the peripheral device, wherein the data processing request is used for acquiring the data to be accessed and evicting corresponding cache data, and the data eviction request is used for evicting the corresponding cache data;
acquiring the data to be accessed after the processor core that caches the data to be accessed responds to the data processing request, sends the data to be accessed to the probe filter, and evicts the corresponding cache data corresponding to the data to be accessed;
sending the data to be accessed to the processor core that initiates the access request after the peripheral device responds to the data eviction request, evicts the corresponding cache data corresponding to the data to be accessed and sends a response message to the probe filter; and
executing an updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

8. The method according to claim 7, wherein, when the cache status of the data to be accessed does not exist in the host cache record table, the processing the data to be accessed based on a permission that the access request to acquire and the information in the host cache record table comprises:
sending a data reading request to a memory controller, wherein the data reading request is used for reading the data to be accessed and device cache information corresponding to the data to be accessed;
acquiring the data to be accessed after the memory controller responds to the data reading request and sends the data to be accessed and the device cache information corresponding to the data to be accessed to the probe filter;
inquiring the device cache information to determine whether there are other statuses in which a peripheral device caches the data to be accessed;
if so, sending a data eviction request which is used for requesting the peripheral device to evict the cache data corresponding to the data to be accessed; sending the data to be accessed to the processor core after the peripheral device responds to the data processing request, evict the cache data corresponding to the data to be accessed, and sends a response message to the probe filter; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device; and executing an updating process of the device cache information, such that the device cache information indicates that the corresponding data in the memory is cached by the peripheral device as invalid;
if not, sending the data to be accessed to the processor core that initiates the access request; and
executing the updating process of the host cache record table, such that an exclusive status corresponding to the data to be accessed is recorded in the host cache record table, and the peripheral sharing identifier corresponding to the data to be accessed indicates that the corresponding cache data is not shared by the peripheral device.

9. The method according to claim 5, wherein in the access request, the request initiator is a peripheral device, and the peripheral device requests to acquire an exclusive permission of the data to be accessed;
when the cache status of the data to be accessed exists in the host cache record table, the processing the data to be accessed based on a permission that the access request to acquire and the information in the host cache record table comprises:
sending a data processing request to the processor core that caches the data to be accessed, wherein the data processing request is used for acquiring the data to be accessed and evicting the cache data corresponding to the processor core;
acquiring the data to be accessed after the processor core responds to the data processing request, sends the data to be accessed to the probe filter, and evicts the cache data corresponding to the data to be accessed;
sending the data to be accessed to the peripheral device; and
executing an updating process of device cache information, such that the device cache information indicates that the corresponding data in the memory is cached by the peripheral device as exclusive.

10. A computer device, comprising a host and a peripheral device,
wherein the host comprises a plurality of processor cores and a probe filter, and each processor core is configured with a corresponding host cache;
the probe filter is configured with a host cache record table, the host cache record table is used for recording a status of cache data of the host in the host cache and a peripheral sharing identifier corresponding to the cache data, and the peripheral sharing identifier is used for indicating whether the cache data is shared by the peripheral device;
**characterized in that** when a processor core exclusively owns the cache data, the peripheral sharing identifier is updated such that the peripheral sharing identifier indicates that the corresponding cache data is not shared by the peripheral device; and
when the peripheral device exclusively owns the cache data, a status entry corresponding to the cache data is deleted from the host cache record table.

11. The computer device according to claim 10, wherein the host cache record table comprises status entries corresponding to the cache data in the host one by one, and a status entry comprises an address tag, a cache status, a data owner, data distribution, and the peripheral sharing identifier;
the peripheral sharing identifier is configured at a redundant bit of the status entry; or, the peripheral sharing identifier is configured at an independent storage bit of the status entry, wherein the peripheral sharing identifier occupies a 1-bit storage space of the status entry.

12. The computer device according to any one of claims 10-11, wherein the host computer further comprises a memory, wherein device cache information of cache data which is cached by the peripheral device is stored in the memory, and the device cache information is used for recording status of the cache data which is cached by the peripheral device, and wherein the device cache information is stored in a redundant space of a memory page where data in the memory corresponding to the cache data which is cached by the peripheral device is located.

13. A data access apparatus, comprising:
A request acquisition module (200) configured to acquire an access request, wherein the access request is used for enabling a request initiator to access data to be accessed, and the access request comprises permission information that the request initiator to acquire;
a status inquiry module (210) configured to inquire whether a cache status of the data to be accessed exists in a host cache record table, wherein the host cache record table is used for recording a status of cache data of a host in a host cache and a peripheral sharing identifier corresponding to the cache data, and the peripheral sharing identifier is used for indicating whether the cache data is shared by a peripheral device; and
an access processing module (220) configured to process the data to be accessed based on a permission that the access request to acquire and the information in the host cache record table;
**characterized in that**
when the peripheral device exclusively owns the cache data, a status entry corresponding to the cache data is deleted from the host cache record table.

## Patentansprüche

1. Ein Verfahren zur Aufzeichnung eines Cache-Status, wobei das Verfahren auf einen Probe-Filter angewendet wird, wobei eine Host-Cache-Aufzeichnungstabelle in dem Probe-Filter konfiguriert ist, die Host-Cache-Aufzeichnungstabelle dazu dient, einen Status von Cache-Daten eines Hosts in einem Host-Cache und eine den Cache-Daten entsprechende Peripherie-Mitbenutzungskennung aufzuzeichnen, die Peripherie-Mitbenutzungskennung dazu dient, anzuzeigen, ob die Cache-Daten von einem Peripheriegerät mitbenutzt werden, und das Verfahren umfasst:
wenn das Peripheriegerät die Cache-Daten in dem Host-Cache mitbenutzt, Aktualisieren der Peripherie-Mitbenutzungskennung, so dass die Peripherie-Mitbenutzungskennung anzeigt, dass die entsprechenden Cache-Daten von dem Peripheriegerät mitbenutzt werden;
**dadurch gekennzeichnet, dass**, wenn ein Prozessorkern die Cache-Daten exklusiv besitzt, Aktualisieren der Peripherie-Mitbenutzungskennung, so dass die Peripherie-Mitbenutzungskennung anzeigt, dass die entsprechenden Cache-Daten nicht von dem Peripheriegerät mitbenutzt werden; und
wobei wenn das Peripheriegerät die Cache-Daten exklusiv besitzt, das Verfahren ferner umfasst:
Löschen eines den Cache-Daten entsprechenden Statuseintrags in der Host-Cache-Aufzeichnungstabelle.

2. Das Verfahren nach Anspruch 1, wobei wenn das Peripheriegerät die Cache-Daten exklusiv besitzt, das Verfahren ferner umfasst:
Senden einer Anforderung zur Aktualisierung von Geräte-Cache-Informationen, um Geräte-Cache-Informationen in einem Speicher so zu aktualisieren, dass die Geräte-Cache-Informationen anzeigen, dass entsprechende Daten in dem Speicher von dem Peripheriegerät als exklusiv zwischengespeichert werden.

3. Das Verfahren nach Anspruch 1, wobei wenn der Prozessorkern die Cache-Daten exklusiv besitzt, das Verfahren ferner umfasst:
Aktualisieren eines Status der Cache-Daten in dem Host-Cache in der Host-Cache-Aufzeichnungstabelle, so dass der Status der Cache-Daten in der Host-Cache-Aufzeichnungstabelle anzeigt, dass die Cache-Daten exklusiv im Besitz des Prozessorkerns sind.

4. Das Verfahren nach Anspruch 1, wobei wenn der Prozessorkern die Cache-Daten exklusiv besitzt, und die Host-Cache-Aufzeichnungstabelle keinen Status von Cache-Daten enthält, auf die zugegriffen werden soll, das Verfahren ferner umfasst:
Senden einer Anforderung zur Aktualisierung von Geräte-Cache-Informationen an einen Speichercontroller, um Geräte-Cache-Informationen in einem Speicher zu aktualisieren, so dass die Geräte-Cache-Informationen anzeigen, dass entsprechende Daten in dem Speicher von dem Peripheriegerät als ungültig zwischengespeichert werden.

5. Ein Datenzugriffsverfahren, wobei das Verfahren auf einen Probe-Filter angewendet wird, eine Host-Cache-Aufzeichnungstabelle in dem Probe-Filter konfiguriert ist, und das Verfahren umfasst:
Erfassen einer Zugriffsanforderung, wobei die Zugriffsanforderung dazu dient, einem Anforderungsinitiator den Zugriff auf Daten, auf die zugegriffen werden soll, zu ermöglichen, und die Zugriffsanforderung Berechtigungsinformationen umfasst, die der Anforderungsinitiator erfassen soll;
Abfragen, ob ein Cache-Status der Daten, auf die zugegriffen werden soll, in einer Host-Cache-Aufzeichnungstabelle existiert, wobei die Host-Cache-Aufzeichnungstabelle dazu dient, einen Status von Cache-Daten eines Hosts in einem Host-Cache eine den Cache-Daten entsprechende Peripherie-Mitbenutzungskennung aufzuzeichnen, und die Peripherie-Mitbenutzungskennung dazu dient, anzuzeigen, ob die Cache-Daten von einem Peripheriegerät mitbenutzt werden; und
Verarbeiten der Daten, auf die zugegriffen werden soll, auf der Grundlage einer Berechtigung der Zugriffsanforderung zum Erfassen und Informationen in der Host-Cache-Aufzeichnungstabelle;
**dadurch gekennzeichnet, dass**, wenn das Peripheriegerät die Cache-Daten exklusiv besitzt, ein den Cache-Daten entsprechender Statuseintrag aus der Host-Cache-Aufzeichnungstabelle gelöscht wird.

6. Das Verfahren nach Anspruch 5, wobei in der Zugriffsanforderung der Anforderungsinitiator das Peripheriegerät ist, und eine Geräte-Cache-Anforderung des Peripheriegeräts eine Mitbenutzungsberechtigung für die Daten, auf die zugegriffen werden soll, erhält;
wenn der Cache-Status der Daten, auf die zugegriffen werden soll, in der Host-Cache-Aufzeichnungstabelle existiert ist, umfasst die Verarbeitung der Daten, auf die zugegriffen werden soll, auf der Grundlage einer Berechtigung der Zugriffsanforderung zum Erfassen und der Informationen in der Host-Cache-Aufzeichnungstabelle:
Senden einer Datenerfassungsfanforderung an einen Prozessorkern, der die Daten, auf die zugegriffen werden soll, zwischenspeichert, wobei die Datenerfassungsanforderung dazu dient, die Daten, auf die zugegriffen werden soll, die von dem Prozessorkern zwischengespeichert werden, zu erfassen;
Erfassen der Daten, auf die zugegriffen werden soll, die von dem Prozessorkern gesendet werden, nachdem der Prozessorkern die Daten, auf die zugegriffen werden soll, gesendet hat;
Senden der Daten, auf die zugegriffen werden soll, an das Peripheriegerät; und
Ausführen eines Aktualisierungsprozesses der Host-Cache-Aufzeichnungstabelle, so dass die den Daten, auf die zugegriffen werden soll, in der Host-Cache-Aufzeichnungstabelle entsprechende Peripherie-Mitbenutzungskennung anzeigt, dass entsprechende Cache-Daten von dem Peripheriegerät mitbenutzt werden.

7. Das Verfahren nach Anspruch 5, wobei in der Zugriffsanforderung der Anforderungsinitiator ein Prozessorkern aus einer Vielzahl von Prozessorkernen ist, und der Prozessorkern das Erlangen einer exklusiven Berechtigung für die Daten, auf die zugegriffen werden soll, anfordert;
wenn der Cache-Status der Daten, auf die zugegriffen werden soll, in der Host-Cache-Aufzeichnungstabelle existiert, und die Daten, auf die zugegriffen werden soll, von einem Gerätecache mitbenutzt werden, umfasst die Verarbeitung der Daten, auf die zugegriffen werden soll, auf der Grundlage einer Berechtigung der Zugriffsanforderung zum Erfassen und der Informationen in der Host-Cache-Aufzeichnungstabelle:
Senden einer Datenverarbeitungsanforderung an den Prozessorkern, der die Daten, auf die zugegriffen werden soll, zwischenspeichert, und einer Datenverwerfungsanforderung an das Peripheriegerät, wobei die Datenverarbeitungsanforderung dazu dient, die Daten, auf die zugegriffen werden soll, zu erfassen, und entsprechende Cache-Daten zu verwerfen, und die Datenverwerfungsanforderung dazu dient, die entsprechenden Cache-Daten zu verwerfen;
Erfassen der Daten, auf die zugegriffen werden soll, nachdem der Prozessorkern, der die Daten, auf die zugegriffen werden soll, zwischenspeichert, auf die Datenverarbeitungsanforderung reagiert hat, die Daten, auf die zugegriffen werden soll, an den Probe-Filter gesendet hat, und die entsprechenden Cache-Daten, die den Daten, auf die zugegriffen werden soll, entsprechen, verworfen hat;
Senden der Daten, auf die zugegriffen werden soll, an den Prozessorkern, der die Zugriffsanforderung initiiert, nachdem das Peripheriegerät auf die Datenverwerfungsanforderung reagiert hat, die entsprechenden Cache-Daten, die den Daten, auf die zugegriffen werden soll, entsprechen, verworfen hat, und eine Reaktionsnachricht an den Probe-Filter gesendet hat; und
Ausführen eines Aktualisierungsprozesses der Host-Cache-Aufzeichnungstabelle, so dass ein exklusiver Status, der den Daten, auf die zugegriffen werden soll, entspricht, in der Host-Cache-Aufzeichnungstabelle aufgezeichnet wird, und die Peripherie-Mitbenutzungskennung, die den Daten entspricht, auf die zugegriffen werden soll, anzeigt, dass die entsprechenden Cache-Daten nicht von dem Peripheriegerät mitbenutzt werden.

8. Das Verfahren nach Anspruch 7, wobei, wenn der Cache-Status der Daten, auf die zugegriffen werden soll, in der Host-Cache-Aufzeichnungstabelle nicht existiert, die Verarbeitung der Daten, auf die zugegriffen werden soll, auf der Grundlage einer Berechtigung der Zugriffsanforderung zum Erfassen und der Informationen in der Host-Cache-Aufzeichnungstabelle umfasst:
Senden einer Datenleseanforderung an einen Speichercontroller, wobei die Datenleseanforderung zum Lesen der Daten, auf die zugegriffen werden soll, und der den Daten, auf die zugegriffen werden soll, entsprechenden Geräte-Cache-Informationen dient;
Erfassen der Daten, auf die zugegriffen werden soll, nachdem der Speichercontroller auf die Datenleseanforderung reagiert hat, und die Daten, auf die zugegriffen werden soll, und die den Daten, auf die zugegriffen werden soll, entsprechenden Geräte-Cache-Informationen an den Probe-Filter gesendet hat;
Abfragen der Geräte-Cache-Informationen, um zu bestimmen, ob es andere Status gibt, in denen ein Peripheriegerät die Daten, auf die zugegriffen werden soll, zwischenspeichert;
falls ja, Senden einer Datenverwerfungsanforderung, die dazu dient, das Peripheriegerät aufzufordern, die den Daten, auf die zugegriffen werden soll, entsprechenden Cache-Daten zu verwerfen; Senden der Daten, auf die zugegriffen werden soll, an den Prozessorkern, nachdem das Peripheriegerät auf die Datenverarbeitungsanforderung reagiert hat, die den Daten, auf die zugegriffen werden soll, entsprechenden Cache-Daten verworfen hat, und eine Reaktionsnachricht an den Probe-Filter gesendet hat; und
Ausführen des Aktualisierungsprozesses der Host-Cache-Aufzeichnungstabelle, so dass ein exklusiver Status, der den Daten entspricht, auf die zugegriffen werden soll, in der Host-Cache-Aufzeichnungstabelle aufgezeichnet wird, und die Peripherie-Mitbenutzungskennung, die den Daten entspricht, auf die zugegriffen werden soll, anzeigt, dass die entsprechenden Cache-Daten nicht von dem Peripheriegerät mitbenutzt werden; und Ausführen eines Aktualisierungsprozesses der Geräte-Cache-Informationen, so dass die Geräte-Cache-Informationen anzeigen, dass die entsprechenden Daten in dem Speicher von dem Peripheriegerät als ungültig zwischengespeichert werden;
falls nicht, Senden der Daten, auf die zugegriffen werden soll, an den Prozessorkern, der die Zugriffsanforderung initiiert; und
Ausführen des Aktualisierungsprozesses der Host-Cache-Aufzeichnungstabelle, so dass ein exklusiver Status, der den Daten entspricht, auf die zugegriffen werden soll, in der Host-Cache-Aufzeichnungstabelle aufgezeichnet wird, und die Peripherie-Mitbenutzungskennung, die den Daten entspricht, auf die zugegriffen werden soll, anzeigt, dass die entsprechenden Cache-Daten nicht von dem Peripheriegerät mitbenutzt werden.

9. Das Verfahren nach Anspruch 5, wobei in der Zugriffsanforderung, der Anforderungsinitiator ein Peripheriegerät ist, und das Peripheriegerät die Erlangung einer exklusiven Berechtigung für die Daten, auf die zugegriffen werden soll, anfordert;
wenn der Cache-Status der Daten, auf die zugegriffen werden soll, in der Host-Cache-Aufzeichnungstabelle existiert, die Verarbeitung der Daten, auf die zugegriffen werden soll, auf der Grundlage einer Berechtigung der Zugriffsanforderung zum Erfassen und der Informationen in der Host-Cache-Aufzeichnungstabelle umfasst:
Senden einer Datenverarbeitungsanforderung an den Prozessorkern, der die Daten, auf die zugegriffen werden soll, zwischenspeichert, wobei die Datenverarbeitungsanforderung zum Erfassen der Daten, auf die zugegriffen werden soll, und zum Verwerfen der dem Prozessorkern entsprechenden Cache-Daten dient;
Erfassen der Daten, auf die zugegriffen werden soll, nachdem der Prozessorkern auf die Datenverarbeitungsanforderung reagiert hat, die Daten, auf die zugegriffen werden soll, an den Probe-Filter gesendet hat, und die Cache-Daten, die den Daten entsprechen, auf die zugegriffen werden soll, verworfen hat;
Senden der Daten, auf die zugegriffen werden soll, an das Peripheriegerät; und
Ausführen eines Aktualisierungsprozesses der Geräte-Cache-Informationen, so dass die Geräte-Cache-Informationen anzeigen, dass die entsprechenden Daten in dem Speicher von dem Peripheriegerät als exklusiv zwischengespeichert werden.

10. Ein Computergerät, umfassend einen Host und ein Peripheriegerät, wobei der Host eine Vielzahl von Prozessorkernen und einen Probe-Filter umfasst, und jeder Prozessorkern mit einem entsprechenden Host-Cache konfiguriert ist;
der Probe-Filter mit einer Host-Cache-Aufzeichnungstabelle konfiguriert ist, die Host-Cache-Aufzeichnungstabelle dazu dient, einen Status von Cache-Daten des Hosts in dem Host-Cache und eine den Cache-Daten entsprechende Peripherie-Mitbenutzungskennung aufzuzeichnen, und die Peripherie-Mitbenutzungskennung dazu dient, anzuzeigen, ob die Cache-Daten von dem Peripheriegerät mitbenutzt werden;
**dadurch gekennzeichnet, dass**, wenn ein Prozessorkern die Cache-Daten exklusiv besitzt, die Peripherie-Mitbenutzungskennung so aktualisiert wird, dass die Peripherie-Mitbenutzungskennung anzeigt, dass die entsprechenden Cache-Daten nicht von dem Peripheriegerät mitbenutzt werden; und
wenn das Peripheriegerät die Cache-Daten exklusiv besitzt, ein den Cache-Daten entsprechender Statuseintrag aus der Host-Cache-Aufzeichnungstabelle gelöscht wird.

11. Das Computergerät nach Anspruch 10, wobei die Host-Cache-Aufzeichnungstabelle Statuseinträge umfasst, die den Cache-Daten in dem Host einszu-eins entsprechen, und ein Statuseintrag ein Adress-Tag, einen Cache-Status, einen Dateneigentümer, eine Datenverteilung und die Peripherie-Mitbenutzungskennung umfasst;
die Peripherie-Mitbenutzungskennung an einem redundanten Bit des Statuseintrags konfiguriert ist; oder die Peripherie-Mitbenutzungskennung an einem unabhängigen Speicherbit des Statuseintrags konfiguriert ist, wobei die Peripherie-Mitbenutzungskennung einen 1-Bit-Speicherplatz des Statuseintrags einnimmt.

12. Das Computergerät nach einem der Ansprüche 10 bis 11, wobei der Host-Computer ferner einen Speicher umfasst, wobei Geräte-Cache-Informationen von Cache-Daten, die von dem Peripheriegerät zwischengespeichert werden, in dem Speicher gespeichert sind, und die Geräte-Cache-Informationen zur Aufzeichnung des Status der von dem Peripheriegerät zwischengespeicherten Cache-Daten dient, und wobei die Geräte-Cache-Informationen in einem redundanten Bereich einer Speicherseite gespeichert sind, in der sich Daten in dem Speicher befinden, die den von dem Peripheriegerät zwischengespeicherten Cache-Daten entsprechen.

13. Eine Datenzugriffsvorrichtung, umfassend:
ein Anforderungserfassungsmodul (200), das konfiguriert ist, eine Zugriffsanforderung zu erfassen, wobei die Zugriffsanforderung dazu dient, einem Anforderungsinitiator den Zugriff auf die Daten, auf die zugegriffen werden soll, zu ermöglichen, und die Zugriffsanforderung Berechtigungsinformationen des Anforderungsinitiators zum Erfassen umfasst;
ein Statusabfragemodul (210), das konfiguriert ist, abzufragen, ob ein Cache-Status der Daten, auf die zugegriffen werden soll, in einer Host-Cache-Aufzeichnungstabelle existiert, wobei die Host-Cache-Aufzeichnungstabelle dazu dient, einen Status von Cache-Daten eines Hosts in einem Host-Cache und eine den Cache-Daten entsprechende Peripherie-Mitbenutzungskennung aufzuzeichnen, und die Peripherie-Mitbenutzungskennung dazu dient, anzuzeigen, ob die Cache-Daten von einem Peripheriegerät mitbenutzt werden; und
ein Zugriffsverarbeitungsmodul (220), das konfiguriert ist, die Daten, auf die zugegriffen werden soll, auf der Grundlage einer Berechtigung der Zugriffsanforderung zum Erfassen und der Informationen in der Host-Cache-Aufzeichnungstabelle zu verarbeiten;
**dadurch gekennzeichnet, dass**, wenn das Peripheriegerät die Cache-Daten exklusiv besitzt, ein den Cache-Daten entsprechender Statuseintrag aus der Host-Cache-Aufzeichnungstabelle gelöscht wird.

## Revendications

1. Procédé d'enregistrement d'état d'antémémoire, dans lequel le procédé est appliqué à un filtre de sonde, dans lequel une table d'enregistrement d'antémémoire hôte est configurée dans le filtre de sonde, la table d'enregistrement d'antémémoire hôte est utilisée pour enregistrer un état de données d'antémémoire d'un hôte dans une antémémoire hôte et un identifiant de partage périphérique correspondant aux données d'antémémoire, l'identifiant de partage périphérique est utilisé pour indiquer si les données d'antémémoire sont partagées par un dispositif périphérique, et le procédé comprend :
lorsque le dispositif périphérique partage les données d'antémémoire dans l'antémémoire hôte, la mise à jour de l'identifiant de partage périphérique de sorte que l'identifiant de partage périphérique indique que des données d'antémémoire correspondantes sont partagées par le dispositif périphérique ;
**caractérisé par**,
lorsqu'un cœur de processeur possède exclusivement les données d'antémémoire, la mise à jour de l'identifiant de partage périphérique de sorte que l'identifiant de partage périphérique indique que les données d'antémémoire correspondantes ne sont pas partagées par le dispositif périphérique ; et
dans lequel lorsque le dispositif périphérique possède exclusivement les données d'antémémoire, le procédé comprend en outre :
la suppression d'une entrée d'état correspondant aux données d'antémémoire dans la table d'enregistrement d'antémémoire hôte.

2. Procédé selon la revendication 1, dans lequel lorsque le dispositif périphérique possède exclusivement les données d'antémémoire, le procédé comprend en outre :
l'envoi d'une demande de mise à jour d'informations d'antémémoire de dispositif pour mettre à jour des informations d'antémémoire de dispositif dans une mémoire, de sorte que les informations d'antémémoire de dispositif indiquent que des données correspondantes dans la mémoire sont mises en antémémoire par le dispositif périphérique comme étant exclusives.

3. Procédé selon la revendication 1, dans lequel lorsque le cœur de processeur possède exclusivement les données d'antémémoire, le procédé comprend en outre :
la mise à jour d'un état des données d'antémémoire dans l'antémémoire hôte dans la table d'enregistrement d'antémémoire hôte, de sorte que l'état des données d'antémémoire dans la table d'enregistrement d'antémémoire hôte indique que les données d'antémémoire sont possédées exclusivement par le cœur de processeur.

4. Procédé selon la revendication 1, dans lequel lorsque le cœur de processeur possède exclusivement les données d'antémémoire, et la table d'enregistrement d'antémémoire hôte ne comprend pas un état de données d'antémémoire auxquelles il faut accéder, le procédé comprend en outre :
l'envoi d'une demande de mise à jour d'informations d'antémémoire de dispositif à un dispositif de commande de mémoire pour mettre à jour des informations d'antémémoire de dispositif dans une mémoire, de sorte que les informations d'antémémoire de dispositif indiquent que des données correspondantes dans la mémoire sont mises en antémémoire par le dispositif périphérique comme étant non valides.

5. Procédé d'accès à des données, dans lequel le procédé est appliqué à un filtre de sonde, une table d'enregistrement d'antémémoire hôte est configurée dans le filtre de sonde, et le procédé comprend :
l'acquisition d'une demande d'accès, dans lequel la demande d'accès est utilisée pour permettre à un initiateur de demande d'accéder à des données auxquelles il faut accéder, et la demande d'accès comprend des informations d'autorisation que l'initiateur de demande doit acquérir ;
le fait de rechercher si un état d'antémémoire des données auxquelles il faut accéder existe dans une table d'enregistrement d'antémémoire hôte, dans lequel la table d'enregistrement d'antémémoire hôte est utilisée pour enregistrer un état de données d'antémémoire d'un hôte dans une antémémoire hôte et un identifiant de partage périphérique correspondant aux données d'antémémoire, et l'identifiant de partage périphérique est utilisé pour indiquer si les données d'antémémoire sont partagées par un dispositif périphérique ; et
le traitement des données auxquelles il faut accéder sur la base d'une autorisation que la demande d'accès doit acquérir et d'informations dans la table d'enregistrement d'antémémoire hôte ;
**caractérisé en ce que**
lorsque le dispositif périphérique possède exclusivement les données d'antémémoire, une entrée d'état correspondant aux données d'antémémoire est supprimée de la table d'enregistrement d'antémémoire hôte.

6. Procédé selon la revendication 5, dans lequel, dans la demande d'accès, l'initiateur de demande est le dispositif périphérique, et une demande d'antémémoire de dispositif du dispositif périphérique obtient une autorisation de partage des données auxquelles il faut accéder ;
lorsque l'état d'antémémoire des données auxquelles il faut accéder existe dans la table d'enregistrement d'antémémoire hôte, le traitement des données auxquelles il faut accéder sur la base d'une autorisation que la demande d'accès doit acquérir et des informations dans la table d'enregistrement d'antémémoire hôte comprend :
l'envoi d'une demande d'acquisition de données à un cœur de processeur qui met en antémémoire les données auxquelles il faut accéder, dans lequel la demande d'acquisition de données est utilisée pour acquérir les données auxquelles il faut accéder mises en antémémoire par le cœur de processeur ;
l'acquisition des données auxquelles il faut accéder envoyées par le cœur de processeur après que le cœur de processeur envoie les données auxquelles il faut accéder ;
l'envoi des données auxquelles il faut accéder au dispositif périphérique ; et
l'exécution d'un processus de mise à jour de la table d'enregistrement d'antémémoire hôte, de sorte que l'identifiant de partage périphérique correspondant aux données auxquelles il faut accéder dans la table d'enregistrement d'antémémoire hôte indique que des données d'antémémoire correspondantes sont partagées par le dispositif périphérique.

7. Procédé selon la revendication 5, dans lequel, dans la demande d'accès, l'initiateur de demande est un cœur de processeur d'une pluralité de cœurs de processeur, et le cœur de processeur demande à acquérir une autorisation exclusive des données auxquelles il faut accéder ;
lorsque l'état d'antémémoire des données auxquelles il faut accéder existe dans la table d'enregistrement d'antémémoire hôte, et les données auxquelles il faut accéder sont partagées par une antémémoire de dispositif, le traitement des données auxquelles il faut accéder sur la base d'une autorisation que la demande d'accès doit acquérir et des informations dans la table d'enregistrement d'antémémoire hôte comprend :
l'envoi d'une demande de traitement de données au cœur de processeur qui met en antémémoire les données auxquelles il faut accéder et d'une demande d'éviction de données au dispositif périphérique, dans lequel la demande de traitement de données est utilisée pour acquérir les données auxquelles il faut accéder et évincer des données d'antémémoire correspondantes, et la demande d'éviction de données est utilisée pour évincer les données d'antémémoire correspondantes ;
l'acquisition des données auxquelles il faut accéder après que le cœur de processeur qui met en antémémoire les données auxquelles il faut accéder répond à la demande de traitement de données, envoie les données auxquelles il faut accéder au filtre de sonde, et évince les données d'antémémoire correspondantes correspondant aux données auxquelles il faut accéder ;
l'envoi des données auxquelles il faut accéder au cœur de processeur qui initie la demande d'accès après que le dispositif périphérique répond à la demande d'éviction de données, évince les données d'antémémoire correspondantes correspondant aux données auxquelles il faut accéder et envoie un message de réponse au filtre de sonde ; et
l'exécution d'un processus de mise à jour de la table d'enregistrement d'antémémoire hôte, de sorte qu'un état exclusif correspondant aux données auxquelles il faut accéder est enregistré dans la table d'enregistrement d'antémémoire hôte, et l'identifiant de partage périphérique correspondant aux données auxquelles il faut accéder indique que les données d'antémémoire correspondantes ne sont pas partagées par le dispositif périphérique.

8. Procédé selon la revendication 7, dans lequel, lorsque l'état d'antémémoire des données auxquelles il faut accéder n'existe pas dans la table d'enregistrement d'antémémoire hôte, le traitement des données auxquelles il faut accéder sur la base d'une autorisation que la demande d'accès doit acquérir et des informations dans la table d'enregistrement d'antémémoire hôte comprend :
l'envoi d'une demande de lecture de données à un dispositif de commande de mémoire, dans lequel la demande de lecture de données est utilisée pour lire les données auxquelles il faut accéder et des informations d'antémémoire de dispositif correspondant aux données auxquelles il faut accéder ;
l'acquisition des données auxquelles il faut accéder après que le dispositif de commande de mémoire répond à la demande de lecture de données et envoie, au filtre de sonde, les données auxquelles il faut accéder et les informations d'antémémoire de dispositif correspondant aux données auxquelles il faut accéder ;
la recherche des informations d'antémémoire de dispositif pour déterminer s'il existe d'autres états dans lesquels un dispositif périphérique met en antémémoire les données auxquelles il faut accéder ;
si tel est le cas, l'envoi d'une demande d'éviction de données qui est utilisée pour demander au dispositif périphérique d'évincer les données d'antémémoire correspondant aux données auxquelles il faut accéder ; l'envoi des données auxquelles il faut accéder au cœur de processeur après que le dispositif périphérique répond à la demande de traitement de données, évince les données d'antémémoire correspondant aux données auxquelles il faut accéder, et envoie un message de réponse au filtre de sonde ; et
l'exécution du processus de mise à jour de la table d'enregistrement d'antémémoire hôte, de sorte qu'un état exclusif correspondant aux données auxquelles il faut accéder est enregistré dans la table d'enregistrement d'antémémoire hôte, et l'identifiant de partage périphérique correspondant aux données auxquelles il faut accéder indique que les données d'antémémoire correspondantes ne sont pas partagées par le dispositif périphérique ; et l'exécution d'un processus de mise à jour des informations d'antémémoire de dispositif, de sorte que les informations d'antémémoire de dispositif indiquent que les données correspondantes dans la mémoire sont mises en antémémoire par le dispositif périphérique comme étant invalides ;
si tel n'est pas le cas, l'envoi des données auxquelles il faut accéder au cœur de processeur qui initie la demande d'accès ; et
l'exécution du processus de mise à jour de la table d'enregistrement d'antémémoire hôte, de sorte qu'un état exclusif correspondant aux données auxquelles il faut accéder est enregistré dans la table d'enregistrement d'antémémoire hôte, et l'identifiant de partage périphérique correspondant aux données auxquelles il faut accéder indique que les données d'antémémoire correspondantes ne sont pas partagées par le dispositif périphérique.

9. Procédé selon la revendication 5, dans lequel dans la demande d'accès, l'initiateur de demande est un dispositif périphérique, et le dispositif périphérique demande d'acquérir une autorisation exclusive des données auxquelles il faut accéder ;
lorsque l'état d'antémémoire des données auxquelles il faut accéder existe dans la table d'enregistrement d'antémémoire hôte, le traitement des données auxquelles il faut accéder sur la base d'une autorisation que la demande d'accès doit acquérir et des informations dans la table d'enregistrement d'antémémoire hôte comprend :
l'envoi d'une demande de traitement de données au cœur de processeur qui met en antémémoire les données auxquelles il faut accéder, dans lequel la demande de traitement de données est utilisée pour acquérir les données auxquelles il faut accéder et évincer les données d'antémémoire correspondant au cœur de processeur ;
l'acquisition des données auxquelles il faut accéder après que le cœur de processeur répond à la demande de traitement de données, envoie les données auxquelles il faut accéder au filtre de sonde, et évince les données d'antémémoire correspondant aux données auxquelles il faut accéder ;
l'envoi des données auxquelles il faut accéder au dispositif périphérique ; et
l'exécution d'un processus de mise à jour d'informations d'antémémoire de dispositif, de sorte que les informations d'antémémoire de dispositif indiquent que les données correspondantes dans la mémoire sont mises en antémémoire par le dispositif périphérique comme étant exclusives.

10. Dispositif informatique, comprenant un hôte et un dispositif périphérique, dans lequel l'hôte comprend une pluralité de cœurs de processeur et un filtre de sonde, et chaque cœur de processeur est configuré avec une antémémoire hôte correspondante ;
le filtre de sonde est configuré avec une table d'enregistrement d'antémémoire hôte, la table d'enregistrement d'antémémoire hôte est utilisée pour enregistrer un état de données d'antémémoire de l'hôte dans l'antémémoire hôte et un identifiant de partage périphérique correspondant aux données d'antémémoire, et l'identifiant de partage périphérique est utilisé pour indiquer si les données d'antémémoire sont partagées par le dispositif périphérique ;
**caractérisé en ce que** lorsqu'un cœur de processeur possède exclusivement les données d'antémémoire, l'identifiant de partage périphérique est mis à jour de sorte que l'identifiant de partage périphérique indique que les données d'antémémoire correspondantes ne sont pas partagées par le dispositif périphérique ; et
lorsque le dispositif périphérique possède exclusivement les données d'antémémoire, une entrée d'état correspondant aux données d'antémémoire est supprimée de la table d'enregistrement d'antémémoire hôte.

11. Dispositif informatique selon la revendication 10, dans lequel la table d'enregistrement d'antémémoire hôte comprend des entrées d'état correspondant aux données d'antémémoire dans l'hôte une par une, et une entrée d'état comprend une balise d'adresse, un état d'antémémoire, un propriétaire de données, une distribution de données et l'identifiant de partage périphérique ;
l'identifiant de partage périphérique est configuré à un bit redondant de l'entrée d'état ; ou, l'identifiant de partage périphérique est configuré à un bit de stockage indépendant de l'entrée d'état, dans lequel l'identifiant de partage périphérique occupe un espace de stockage de 1 bit de l'entrée d'état.

12. Dispositif informatique selon l'une des revendications 10 à 11, dans lequel l'ordinateur hôte comprend en outre une mémoire, dans lequel des informations d'antémémoire de dispositif de données d'antémémoire qui sont mises en antémémoire par le dispositif périphérique sont stockées dans la mémoire, et les informations d'antémémoire de dispositif sont utilisées pour enregistrer un état des données d'antémémoire qui sont mises en antémémoire par le dispositif périphérique, et dans lequel les informations d'antémémoire de dispositif sont stockées dans un espace redondant d'une page de mémoire où se trouvent des données dans la mémoire correspondant aux données d'antémémoire qui sont mises en antémémoire par le dispositif périphérique.

13. Appareil d'accès à des données comprenant :
un module d'acquisition de demande (200) configuré pour acquérir une demande d'accès, dans lequel la demande d'accès est utilisée pour permettre à un initiateur de demande d'accéder à des données auxquelles il faut accéder, et la demande d'accès comprend des informations d'autorisation que l'initiateur de demande doit acquérir ;
un module de recherche d'état (210) configuré pour rechercher si un état d'antémémoire des données auxquelles il faut accéder existe dans une table d'enregistrement d'antémémoire hôte, dans lequel la table d'enregistrement d'antémémoire hôte est utilisée pour enregistrer un état de données d'antémémoire d'un hôte dans une antémémoire hôte et un identifiant de partage périphérique correspondant aux données d'antémémoire, et l'identifiant de partage périphérique est utilisé pour indiquer si les données d'antémémoire sont partagées par un dispositif périphérique ; et
un module de traitement d'accès (220) configuré pour traiter les données auxquelles il faut accéder sur la base d'une autorisation que la demande d'accès doit acquérir et des informations dans la table d'enregistrement d'antémémoire hôte ;
**caractérisé en ce que**
lorsque le dispositif périphérique possède exclusivement les données d'antémémoire, une entrée d'état correspondant aux données d'antémémoire est supprimée de la table d'enregistrement d'antémémoire hôte.
